# EUROPEAN PATENT SPECIFICATION

(11) **EP 3 500 427 B1**
(45) Date of publication and mention of the grant of the patent: **03.02.2021**
(21) Application number: 17757974.5
(22) Date of filing: 11.08.2017
(51) Int. Cl.: B32B 3/12, B32B 3/26, E04B 1/84, E04B 1/86, G10K 11/16, G10K 11/168, G10K 11/172, B60R 13/08

(54) **SOUND-ABSORBING PANELS COMPRISING A CORE CONSISTING OF CONNECTED CELLS, WHEREIN SOME OF THE CELL WALLS HAVE OPENINGS**
SCHALLSCHLUCKPLATTEN MIT EINEM KERN AUS VERBUNDENEN ZELLEN, WOBEI EINIGE ZELLWÄNDE MIT ÖFFNUNGEN VERSEHEN SIND
PANNEAUX ABSORBANT LES SONS COMPRENANT UNE PARTIE CENTRALE CONSTITUÉE DE CELLULES RELIÉES, CERTAINES DES PAROIS DE CELLULE COMPORTANT DES OUVERTURES

(30) Priority: 19.08.2016 US 201662377285 P
(43) Date of publication of application: 26.06.2019
(73) Proprietor: 3M Innovative Properties Company, St. Paul, MN 55133-3427 (US)
(72) Inventor: JONZA, James M., Saint Paul Minnesota 55133-3427 (US); GERDES, Ronald W., Saint Paul Minnesota 55133-3427 (US); HERDTLE, Thomas, Saint Paul Minnesota 55133-3427 (US); KALISH, Jeffrey P., Saint Paul Minnesota 55133-3427 (US); MCNULTY, Jason D., Saint Paul Minnesota 55133-3427 (US); KNECHT, Harold C., III, Saint Paul Minnesota 55133-3427 (US); YOO, Taewook, Saint Paul, Minnesota 55133-3427 (US)
(74) Representative: Mathys & Squire
(86) International application number: PCT/US2017/046399
(87) International publication number: WO 2018/034949

(56) References cited:
- GB-A- 2 486 120
- US-A1- 2008 044 621
- US-A1- 2009 166 127
- JAMES M. JONZA ET AL: "Acoustically Absorbing Lightweight Thermoplastic Honeycomb Panels", SAE INTERNATIONAL JOURNAL OF VEHICLE DYNAMICS, STABILITY, AND NVH, vol. 1, no. 2, 15 January 2017 (2017-01-15), pages 445-454, XP055417551, ISSN: 2380-2170, DOI: 10.4271/2017-01-1813

## Description

### Background

Sound-absorbing panels are sometimes used to reduce noise in, for example, automobiles and other modes of transportation. There exists a need for thin panels that can absorb acoustical frequencies below 1400 Hz. Fibrous absorption is very effective above 2000 Hz, but very thick (over 50 mm) layers are required for absorption below 1400 Hz. Helmholtz resonator designs can effectively absorb low frequency sound, but the need for a cavity of sufficient volume often leads to a thickness in excess of 40 mm. Panels of less than 20 mm thickness, particularly less than 10 mm thickness, that can absorb frequencies below 1400 Hz, are particularly desirable for use in industrial, office and home settings. Lightweight panels that may be shaped into finished articles with curved surfaces would be especially useful in transportation. Panels made of recyclable thermoplastic materials would offer a further sustainability advantage.

GB2486120 reports a composite acoustic panel employed in an inlet passage of a gas turbine engine or turbofan engine of the type fitted to commercial aircraft and comprises a permeable face-layer made of a composite material, an impermeable backing sheet made of a composite material and a sound absorbing layer which may be a metallic foam or metallic honeycomb structure. It is manufactured by a double polymerization process for the face-layer and the remainder of the acoustic panel and finally a perforation step, such as by drilling spindles or laser to perforate the face-layer according to a pre-determined perforation distribution.

US2009/0166127 A1 reports an aircraft cabin panel for sound absorption, with a sandwich construction, comprising a core layer that comprises a plurality of tube-like or honeycomb-like cells that extend in an open manner across the thickness of the core layer and that are separated from each other by cell walls and that are uniform in design. A first cover layer faces away from the sound field, as well as a second cover layer that faces towards the sound field and that comprises a plurality of perforation holes and adjacent cells are interconnected by way of apertures in the cell walls. The perforation of the second cover layer comprises a distance (b) between holes, which distance exceeds the opening width (c) of the cells of the core layer, wherein the first cover layer is closed and wherein the cell walls comprise a perforation so that they are acoustically transparent in the direction parallel to the cover layers

US2008/0044621 A1 reports an artificial honeycomb structure, wherein at least a portion of at least one of the enclosing honeycomb cell walls is substantially porous, open, or permeable, and wherein at least one of the hollow cells comprises at least one substantially nonporous enclosing wall.

### Summary

In one aspect, the present disclosure describes a panel comprising first and second layers each having first and second opposed major surfaces and a core disposed there between, the second layer being free of any openings (i.e., none) between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 (in some disclosures at least 55, 60, 65, 70, 75, or even at least 80; in some disclosures, in a range from 50 to 80) percent of the area of a side of that cell wall, and wherein the first layer has a first opening extending between the first and second major surfaces of the first layer into one and only one cell in the series of connected, fluidly communicating cells.

In another aspect, the present disclosure describes a panel comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein at least 50 (in some disclosures, at least 55, 60, 65, 70, 75, 80, 85, 90, 95, or even at least 100) percent of the openings in a cell wall emanate from either the first or second layer, and wherein the first layer has ; an opening extending between the first and second major surfaces of the first layer into one and only one cell in the series of connected, fluidly communicating cells.

In an additional aspect, the present disclosure describes an article comprising a panel comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has an opening extending between the first and second major surfaces of the first layer into one and only one cell in the series of connected, fluidly communicating cells, wherein the panel is a flat panel or a shaped panel.

In a further aspect, the present disclosure describes a panel comprising first, second, and third layers, each of the first, second, and third layers having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells and a plurality of walls extending from the second surface of the second layer to the first surface of the third layer, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has an opening extending between the first and second major surfaces of the first layer into one and only one cell in the series of connected, fluidly communicating cells.

In another aspect, the present disclosure describes a laminated article comprising first and second panels, each of the first and second panels comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has an opening extending between the first and second major surfaces of the first layer into one and only one cell in the series of connected, fluidly communicating cells, wherein the second surface of the second layer of the first panel is directly attached to the first surface of either the first layer or the second layer of the second panel.

In an additional aspect, the present disclosure describes a method of absorbing at least one acoustical frequency below 1400 Hz by disposing an article adjacent to an item that emits at least one acoustical frequency below 1400 Hz (in some embodiments, less than 1300 Hz or even less than 1200 Hz), wherein the article comprises at least one panel comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series.

In a further aspect, the present disclosure describes a method of making an article, the method comprising: placing a panel in an injection mold; closing the injection mold; and injection molding plastic onto the panel in the injection mold to provide the article.

In another aspect, the present disclosure describes a method of making an article, the method comprising: pre-heating a panel; placing the panel proximate to a thermoforming mold; and applying vacuum or pressure to shape the panel to provide the article.

In an additional aspect, the present disclosure describes a method of making an article, the method comprising: pre-heating a panel; placing the panel between matched halves of a mold; and applying pressure to close the mold and shape the panel to provide the article.

In a further aspect, the present disclosure describes a method of making a laminated article comprising first and second panels, the method comprising welding the first and second panels together, wherein each of the first and second panels comprise first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series, wherein the second surface of the second layer of the first panel is directly attached to the first surface of the first layer of the second panel.

In another aspect, the present disclosure describes a method of making an article, the method comprising: obtaining first and second panels, wherein each panel comprises a layer having first and second opposed major surfaces and a core disposed on the layer, wherein the core has a plurality of walls extending from the second surface of the layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the layer has an opening extending between the first and second major surfaces of the layer into one and only one cell in the series of connected, fluidly communicating cells; heating the first and second panels; contacting the first and second panels such that the core of the first panel is aligned with the core of the second panel; and holding the first panel and the second panel in contact to form a bond between the core of the first panel and the core of the second panel as the first and second panels cool to form the article, wherein the core of the first panel and the core of the second panel together form a core disposed between the layer of the first panel and the layer of the second panel.

In an additional aspect, the present disclosure describes a method of making a panel, the method comprising: generating a panel by an additive manufacturing method; wherein the panel comprises first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has an opening extending between the first and second major surfaces of the first layer into one and only one cell in the series of connected, fluidly communicating cells.

In a further aspect, the present disclosure describes a method of manufacturing an article, the method comprising: modeling an acoustical performance and a structural performance of a plurality of walls forming interconnected channels within the core of a panel; and producing the article comprising a plurality of the walls having the acoustical performance, the structural performance, or both, by an additive manufacturing method.

In another aspect, the present disclosure describes a method of making an article, the method comprising: a. placing at least a portion of a panel in an injection molding die; and b. overmolding at least one mold structure on a surface of the panel in the injection molding die, thereby forming a material-to-material connection between the surface of the panel and the mold structure, wherein the panel comprises first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has an opening extending between the first and second major surfaces of the first layer into one and only one cell in the series of connected, fluidly communicating cells.

Exemplary embodiments of panels described herein can be formed into articles such as panels, walls, or other parts with curved surfaces. In one exemplary method, panels are shaped via thermoforming. In another exemplary method, panels are shaped via insert molding to provide the article. In another exemplary method, panels are shaped via compression molding to provide the article.

### Brief Description of the Drawings

FIG. 1 is a top view of an exemplary panel described herein.
FIG. 1A is a cross-sectional view of the exemplary panel described herein shown in FIG. 1.
FIG. 1B is a perspective view of a cell from FIG. 1.
FIG. 2 is a top view of another exemplary panel described herein.
FIG. 2A is a cross-sectional view of the exemplary panel described herein shown in FIG. 2.
FIG. 2B is a perspective view of a cell from FIG. 2.
FIG. 3 is a top view of an exemplary repeating array of hexagonal cells.
FIG. 4 is a top view of an exemplary spiral repeating array of hexagonal cells.
FIG. 5 is a top view of an exemplary semi-spiral repeating array of hexagonal cells.
FIG. 6 is a top view of an exemplary repeating rectangular array of regular cells.
FIG. 7 is a top view of an exemplary repeating array of triangular cells.
FIG. 8 is a top view of an exemplary repeating array of regular pentagonal cells.
FIG 9 is a top view of an exemplary repeating array of regular triangular and hexagonal cells.
FIG. 10 is a top view of an exemplary repeating array of regular octagonal and rectangular cells.
FIG. 11 is a top view of an exemplary repeating array of regular rectangular and triangular cells.
FIG. 12 is a top view of an exemplary repeating array of cells with multiple shapes, including curved walls.
FIG. 13 is a top view of an exemplary irregular pattern of cells.
FIG. 14 is a top view of 3-D printed samples showing 5, 6, and 7 connected cells and hole locations in one of the skin layers.
FIG. 15 is a plot of acoustical absorption coefficient vs. frequency for Example 1.
FIG. 16 is a plot of acoustical absorption coefficient vs. frequency for Example 2.
FIG. 17 is a plot of acoustical absorption coefficient vs. frequency for Example 3.
FIG. 18 is a plot of acoustical absorption coefficient vs. frequency for Example 4.
FIG. 19 is a top view of the linear array of connected hexagons for Examples 5 and 6.
FIG. 20 is a cross-sectional view of FIG. 19.
FIG. 21 is a schematic showing the ineffective area along the edge of Examples 5 and 6.
FIG. 22 is a plot of Acoustical Absorption Coefficient vs. Frequency for Examples 5 and 6.
FIG. 23 is a plot of Acoustical Absorption Coefficient vs. Frequency for Examples 7, 8, and 9.
FIG. 24 is a schematic perspective view of an exemplary underbody shield described herein.
FIG. 25A is a schematic top view of an exemplary engine cover described herein.
FIG. 25B is a schematic cross-sectional view of the exemplary engine cover of FIG. 25A.
FIG. 25C is a schematic top view of another exemplary engine cover described herein.
FIG. 25D is a schematic cross-sectional view of the exemplary engine cover of FIG. 25C.
FIG. 26 is a plot of acoustical absorption coefficient vs. frequency for Example 10.
FIG. 27 is a schematic perspective view of an exemplary wheel well liner described herein.
FIG. 28A is a partial schematic perspective view of an automobile including a roof area.
FIG. 28B is a partial cross-sectional view of an exemplary headliner described herein.
FIG. 29 is a schematic perspective view of an exemplary floor mat described herein.
FIG. 30A is a cross-sectional view of another exemplary floor mat described herein.
FIG. 30B is a cross-sectional view of a further exemplary floor mat described herein.
FIG. 31 is a cross-sectional view of an exemplary laminated article described herein.
FIG. 32 is a cross-sectional view of another exemplary laminated article described herein.
FIG. 33 is a cross-sectional view of a further exemplary laminated article described herein.
FIG. 34 is a plot of acoustical absorption vs. frequency for Example 11.
FIG. 35 is a plot of acoustical absorption vs. frequency for Example 12
FIG. 36A is a schematic perspective view of an automotive hood.
FIG. 36B is a schematic perspective view of an exemplary hood liner described herein on the underside of an automotive hood.

### Detailed Description

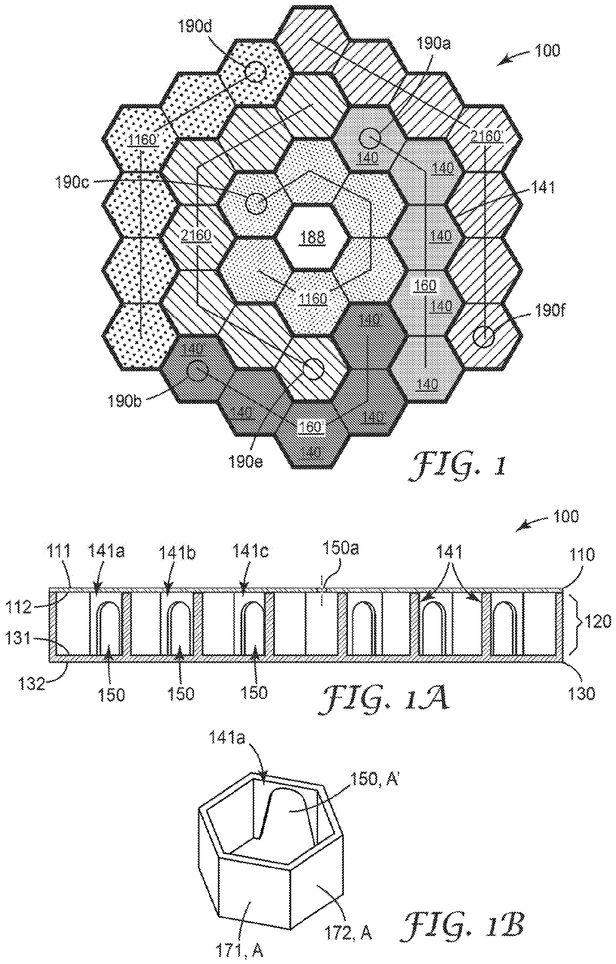

Referring to FIGS. 1, 1A, and 1B, panel 100 has first and second layers 110, 130 each having first and second opposed major surfaces, 111, 112, 131, 132 and core 120 disposed there between. Second layer 130 is free of any openings between first and second major surfaces 131, 132 of second layer 130. Core 120 has plurality of walls 141 extending from second surface 112 of first layer 110 to first surface 131 of second layer 130 providing first series 160, 160' of connected cells 140, 140'. Also shown are second and third series of cells 1160, 1160', and 2160, 2160'. Some of cell walls 141a, 141b, 141c have openings 150 providing fluid communication between first series 160 of five cells 140. Each cell wall 141 has a plurality of sides 171, 172. Each side 171, 172 of cell wall 141 has area A. Opening 150 in cell wall 141a has area A' that is at least 50 percent of area A. First layer 110 has at least first opening 190a, 190b extending between the first and second major surfaces 111, 112 of first layer 110 into at least one cell in series 160, 160'. Note that openings 190a, 190b, 190c, etc., displayed as circles, but can be any of a variety of shapes including squares, triangles, rectangles, hexagons, or other polygons. Multiple openings could also be used, including openings having at least two holes, or openings which include a woven or non-woven permeable material. In some embodiments, at least 50 (in some embodiments, at least 55, 60, 65, 70, 75, 80, 85, 90, 95, or even at least 100) percent of openings 150 in a cell wall 141 emanate from either first layer 110 or second layer 130. Referring to FIGS. 1A and 1B, opening 150 can have contours having curved and straight portions, and any straight portions can be either perpendicular to or tilted at another angle to layers 110 and 130. Optionally the center cell 188 could have an opening in the first layer 110.

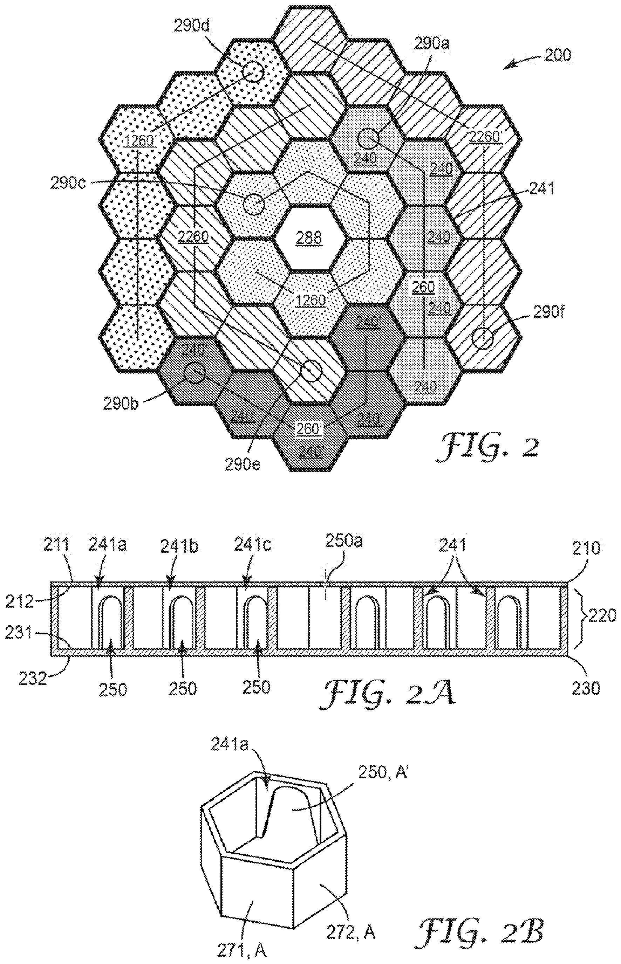

Referring to FIGS. 2, 2A, and 2B, panel 200 has first and second layers 210, 230 each having first and second opposed major surfaces 211, 212, 231, 232 and core 220 disposed there between. Second layer 230 is free of any openings between first and second major surfaces 231, 232 of second layer 230. Core 220 has plurality of walls 241 extending from second surface 212 of first layer 210 to first surface 231 of second layer 230 providing first series 260, 260' of connected cells 240, 240'. Also shown are second and third series of cells 1260, 1260' and 2260, 2260'. Some of cell walls 241a, 241b, 241c have openings 250 providing fluid communication between first series 260 of five cells 240. At least 50 percent of openings 250 in cell walls 241 emanate from either first or second layer 210, 230. In some embodiments of panels 200, each cell wall has a plurality of sides, wherein each side of a cell wall has an area (A), and wherein the opening in a cell wall has an area (A') that is at least 50 (in some embodiments, at least 55, 60, 65, 70, 75, or even at least 80; in some embodiments, in a range from 50 to 80) percent of the area of a side of that cell wall. Optionally the center cell 288 can have an opening in the first layer 210.

In some embodiments of panels described herein, the series of cells has a first cell in the series and a last cell in the series, and wherein first opening extends into either the first or last cell in the series. In some embodiments of panels described herein, the series of cells includes a middle cell in the series.

In some embodiments of panels described herein, the series of cells has a first cell in a series, a last cell in the series, and at least one cell between the first and last cells, and wherein first opening extends into one of the cells between the first and last cells. In some embodiments, one of the cells between the first and last cells is a middle cell.

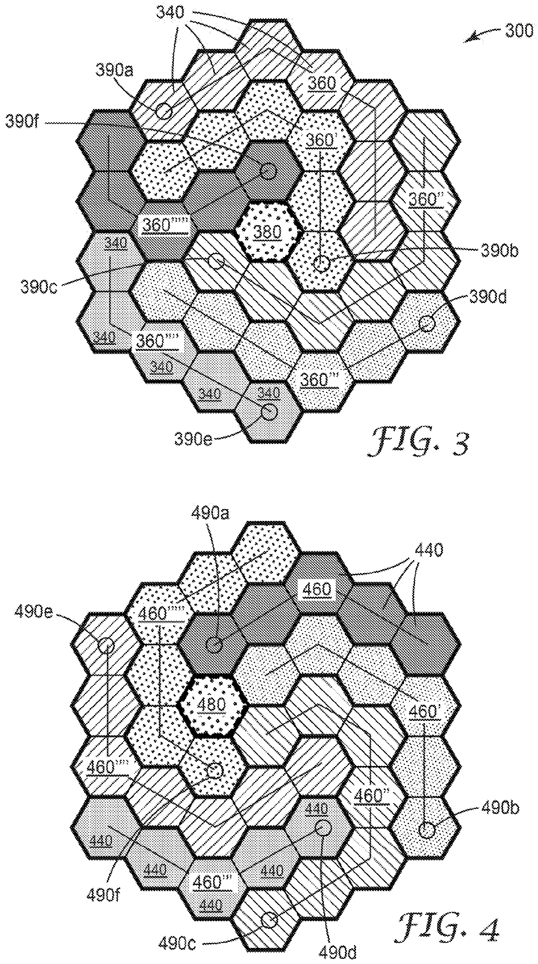

In some embodiments of panels described herein, the series of cells is in a regular pattern. For example, FIG. 3 shows a group of regular repeating hexagonal arrays 360, 360', 360", 360"', 360"", 360""' of connected cells 340 and openings 390a, 390b, 390c, 390d, 390e, 390f. Cell 380 could be added to the 360', 360", or 360"'" series of connected cells or stand alone.

FIG. 4 shows a group of spiral repeating hexagonal array 460, 460', 460", 460"', 460"", 460'"" of connected cells 440 and openings 490a, 490b, 490c, 490d, 490e, 490f. Cell 480 could be added to the 460, 460', 460", or 460""' series of connected cells or stand alone.

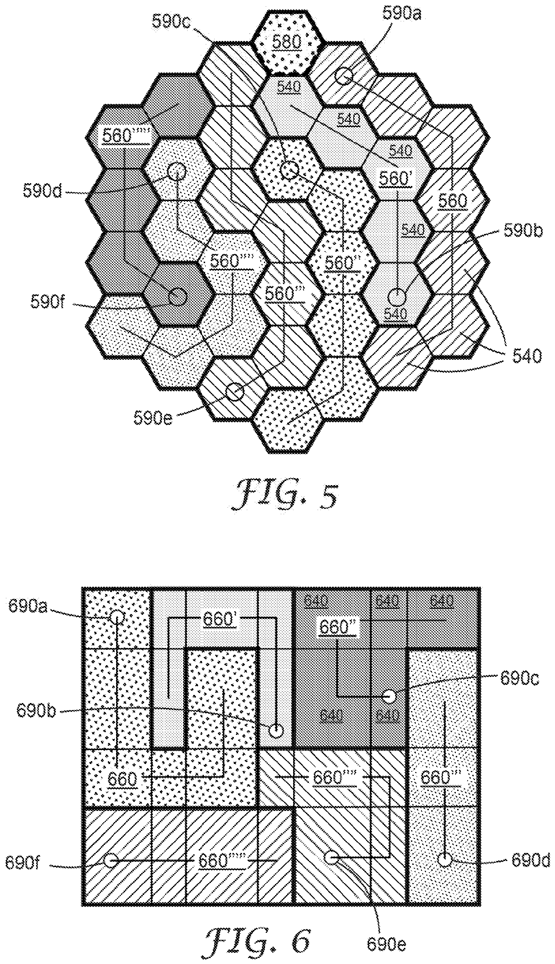

FIG. 5 shows a group of semi-spiral repeating hexagonal array 560, 560', 560", 560"', 560"", 560""' of connected cells 540 and openings 590a, 590b, 590c, 590d, 590e, 590f. Cell 580 could be added to the 560, 560', or 560"' series of connected cells or stand alone.

FIG. 6 shows an exemplary group of rectangular arrays 660, 660', 660", 660"', 660"", 660""' of connected cells 640 and openings 690a, 690b, 690c, 690d, 690e, 690f.

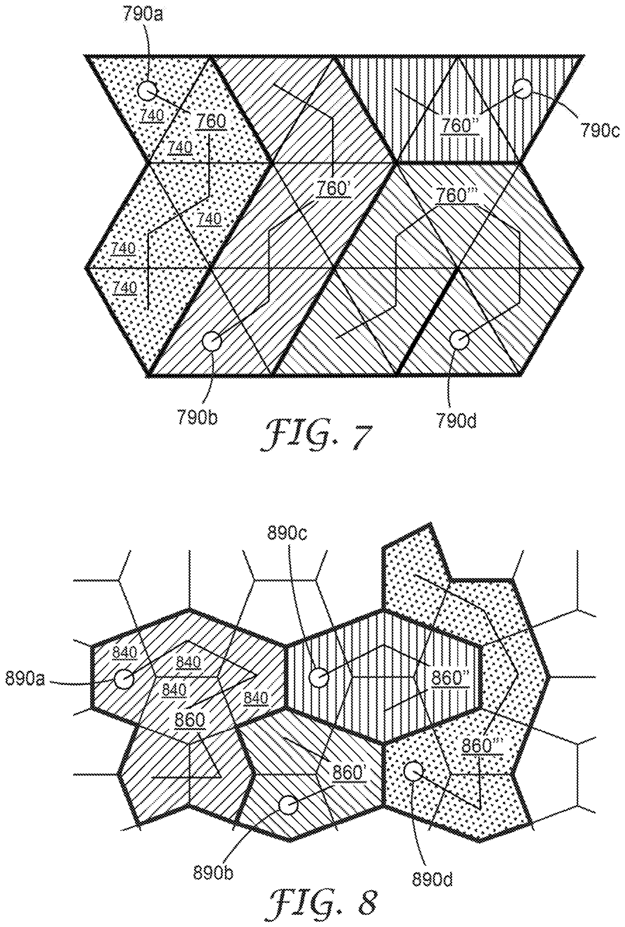

FIG. 7 shows an exemplary group of triangular arrays 760, 760', 760", 760"' of connected cells 740 and openings 790a, 790b, 790c, 790d, 790e.

FIG. 8 shows an exemplary group of pentagonal arrays 860, 860', 860", 860"' of connected cells 840 and openings 890a, 890b, 890c, 859d, 890e.

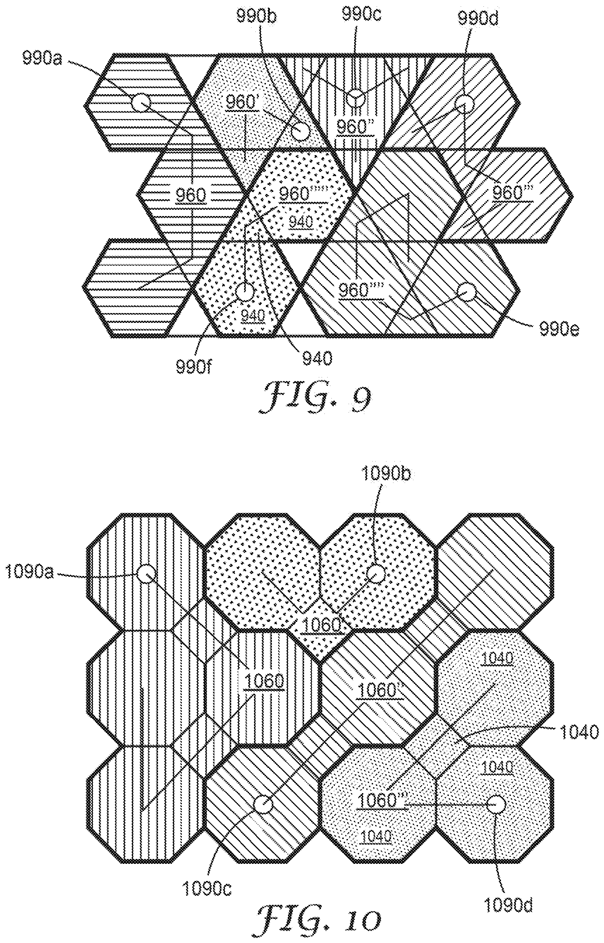

FIG. 9 shows an exemplary group of connected triangles and hexagons 906, 960', 960", 960"', 960"", 960""' of connected cells 940 and openings 990a, 990b, 990c, 990d, 990e, 990f.

FIG. 10 shows an exemplary group of connected octagons and squares 1060, 1060', 1060", 1060"' of connected cells 1040 and openings 1090a, 1090b, 1090c, 1090d.

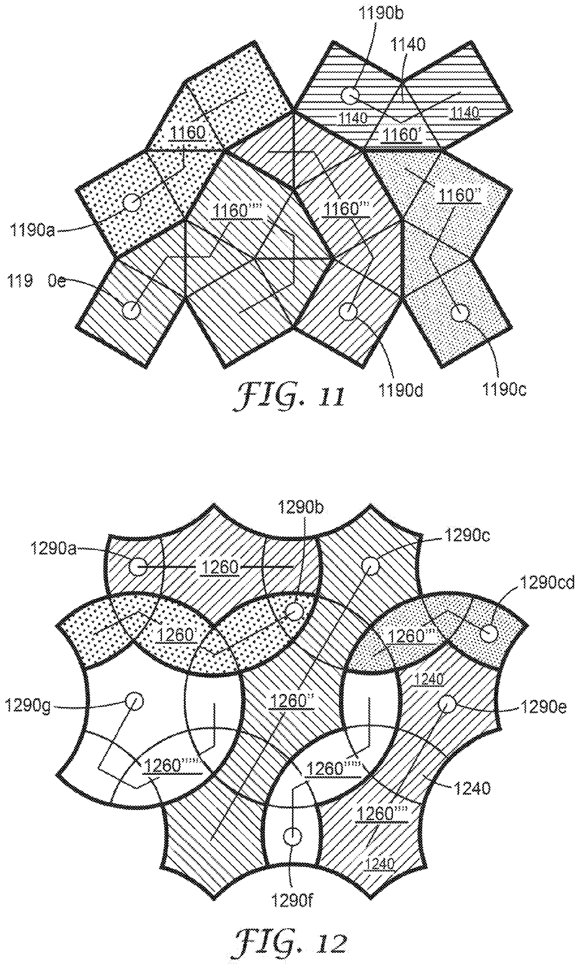

FIG. 11 shows an exemplary group of squares and triangles 1160, 1160', 1160", 1160"', 1160"" of connected cells 1140 and openings 1190a, 1190b, 1190c, 1190d, 1190e.

FIG. 12 shows an exemplary array of mixed shapes 1260, 1260', 1260", 1260"', 1260"", 1260""'. 1260""" of connected cells 1240 and openings 1290a, 1290b, 1290c, 1290d, 1290e, 1290f, 1290g.

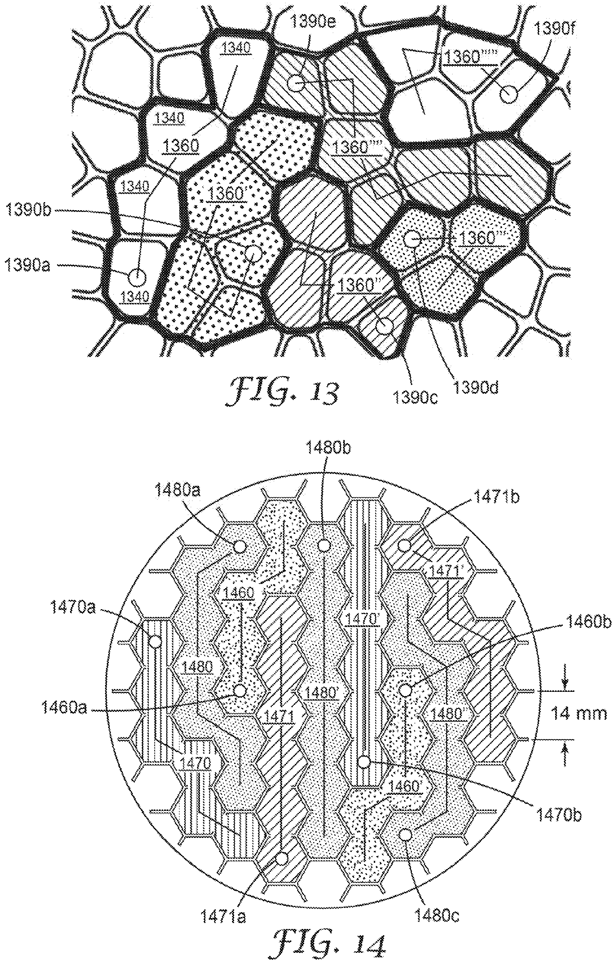

FIG. 13 shows an exemplary array of random shapes 1360, 1360', 1360", 1360"', 1360"", 1360""' of connected cells 1340 and openings 1390a, 1390b, 1390c, 1390d, 1390e, 1390f.

In some embodiments of panels described herein, at least one of the first or second layer is free of openings.

In some embodiments of panels described herein, each cell has at least 3 (in some embodiments, at least 4, 5, 6, 7, 8, 9, or even at least 10) walls.

In some embodiments of panels described herein, each cell has a largest distance between two opposed walls of at least 3 mm (in some embodiments, at least 5 mm, 10 mm, 15 mm, 20 mm, 25 mm, or even at least 30 mm; in some embodiments, in a range from 3 mm to 30 mm, 7 mm to 30 mm, 15 mm to 30 mm, or even 20 mm to 30 mm). In some embodiments of panels described herein, each cell has a largest distance between two opposed vertices of at least 5 mm (in some embodiments, at least 10 mm, 15 mm, 20 mm, 25 mm, 30 mm, 35 mm, or even at least 40 mm; in some embodiments, in a range from 15 mm to 40 mm, 20 mm to 40 mm, or even 30 mm to 40 mm).

In some embodiments of panels described herein, each cell has a distance from the second surface of the first layer to the first surface of the second layer of at least 2 mm (in some embodiments, at least 3 mm, 4 mm, 5 mm, 6 mm, 7 mm, 8 mm, 9 mm, 10 mm, or even at least 15 mm; in some embodiments, in a range from 4 mm to 15 mm, 7 mm to 15 mm, or even 10 mm to 15 mm).

In some embodiments of panels described herein, each cell has a volume of at least 0.04 cm³ (in some embodiments, at least 0.1 cm³, 0.5 cm³, 1 cm³, 2 cm³, 3 cm³, 4 cm³, 5 cm³, 10 cm³, 15 cm³, 20 cm³, 25 cm³, or even at least 30 cm³; in some embodiments, in a range from 0.04 cm³ to 30 cm³, 0.1 cm³ to 30 cm³, 0.5 cm³ to 30 cm³, 2 cm³ to 30 cm³, or even 15 cm³ to 30 cm³).

In some embodiments of panels described herein, a series of cells has a cumulative volume of at least 0.5 cm³ (in some embodiments, at least 1 cm³, 1.5 cm³, 2 cm³, 3 cm³, 4 cm³, 5 cm³, 10 cm³, 25 cm³, 50 cm³, 75 cm³, 100 cm³, 150 cm³, or even at least 200 cm³; in some embodiments, in a range from 1.5 cm³ to 200 cm³, 10 cm³ to 120 cm³, or even 50 cm³ to 200 cm³).

In some embodiments of panels described herein, a series of cells has a cumulative length of at least 20 mm (in some embodiments, at least 30 mm, 40 mm, 50 mm, 75 mm, 100 mm, 150 mm, or even at least 200 mm; in some embodiments, in a range from 30 mm to 200 mm, 50 mm to 200 mm, or even 100 mm to 200 mm).

In some embodiments, a series of cells of panels described herein has a cumulative length of at least 20 mm (in some embodiments, at least 25 mm, 30 mm, 40 mm, or even at least 50 mm).

In some embodiments of panels described herein, the first layer comprises at least one of polymeric, metallic, ceramic, or composite materials (e.g., fiber reinforced, woven or non-woven in a resin matrix). In some embodiments of panels described herein, the second layer comprises at least one of polymeric, metallic, ceramic, or composite materials (e.g., fiber reinforced, woven or non-woven in a resin matrix). In some embodiments of panels described herein, the core comprises at least one of polymeric, metallic, ceramic, or composite materials (e.g., fiber reinforced, woven or non-woven in a resin matrix).

Exemplary polymeric materials include polyethylenes, polypropylenes, polyolefins, polyvinylchlorides, polyurethanes, polyesters, polyamides, polystyrene, copolymers thereof, and combinations thereof (including blends). The polymeric materials may be thermosetting by, for example, heat or ultraviolet (UV) radiation, or thermoplastic.

Exemplary metallic materials include aluminum, steel, nickel, copper, brass, bronze, and alloys thereof.

Exemplary ceramic (including glass, glass-ceramic, and crystalline ceramic) materials include oxides, nitrides, and carbides.

Exemplary fiber containing materials include fibers such as cellulose, carbon, thermoplastic fibers (polyamide, polyester, and aramid, polyolefin), steel, and glass, as may be applicable to the particular type of material.

In some embodiments, materials for panels described herein may be in the form of multilayers.

Optionally materials for panels described herein may also include fillers, colorants, plasticizers, dyes, etc., as may be applicable to the particular type of material.

In some embodiments, panels described herein have a single composition. Such embodiments are desirable to enhance recyclability.

In some embodiments of panels described herein, the first layer has a thickness of at least 0.01 mm (in some embodiments, at least 0.05 mm, 0.1 mm, 0.25 mm, 0.5 mm, 1 mm, 1.5 mm, 2 mm, 2.5 mm, or even at least 3 mm; in some embodiments, in a range from 0.025 mm to 0.5 mm, 0.1 mm to 2 mm, 0.25 mm to 3 mm or even 0.5 mm to 3 mm). In some embodiments of panels described herein, the second layer has a thickness of at least 0.01 mm (in some embodiments, at least 0.05 mm, 0.1 mm, 0.25 mm, 0.5 mm, 1 mm, 1.5 mm, 2 mm, 2.5 mm, or even at least 3 mm; in some embodiments, in a range from 0.025 mm to 0.5 mm, 0.1 mm to 2 mm, 0.25 mm to 3 mm or even 0.5 mm to 3 mm). In some embodiments, panels described herein have a thickness of at least 4 mm (in some embodiments, at least 7 mm, 10 mm, or even at least 15 mm; in some embodiments, in a range from 4 mm to 8 mm, 6 mm to 10 mm, or even 8 mm to 15 mm).

In some embodiments of panels described herein, the cell walls have a thickness of at least 0.01 mm (in some embodiments, at least 0.05 mm, 0.1 mm, 0.2 mm, or even at least 0.5 mm; in some embodiments, in a range from 0.01 mm to 0.2 mm, 0.05 mm to 0.5 mm, or even 0.1 mm to 0.5 mm).

In some embodiments of panels described herein, the first series of cells comprises at least 4 (in some embodiments, at least 5, 6, 7, 8, 9, 10, 11, 12, 13, 14, 15, 16, 17, 18, 19, 20, 21, 22, 23, 24, 25, 26, 27, 28, 29, 30 or more) cells. In some embodiments, panels described herein further comprising a second series of at least 3 (in some embodiments, at least 4, 5, 6, 7, 8, 9, 10, 11, 12, 13, 14, 15, 16, 17, 18, 19, 20, 21, 22, 23, 24, 25, 26, 27, 28, 29, 30 or more) cells. In some embodiments, panels described herein further comprising a third series of at least 3 (in some embodiments, at least 4, 5, 6, 7, 8, 9, 10, 11, 12, 13, 14, 15, 16, 17, 18, 19, 20, 21, 22, 23, 24, 25, 26, 27, 28, 29, 30 or more) cells.

In some embodiments, panels described herein further comprising a tie layer on at least a portion of the second of the major surface of the first layer. In some embodiments, panels described herein further comprising a tie layer on at least a portion of the first of the major surface of the second layer. Although not wanting to be bound by theory, the tie layer is believed to facilitate adhesion between first or second layer 110, 130 and core layer 120. In some cases, the same polymer used for the skin and core may also be used as the tie layer. This approach forms a desirable recyclable panel as all components have substantially the same composition (i.e., at least 85 percent by weight is the same composition). In some embodiments, similar polymers for both the core and skins can be used. In some embodiments, additives to slow the crystallization rate and/or reduce the viscosity of the tie layer may be used. These minor additives desirably do not affect the recycling of polymers. In some embodiments, additives that promote a chemical bond between the tie layer and the skin and/or the core can be employed. In some embodiments, block copolymers can be useful where the copolymer has blocks containing polymers with affinity for the skin and blocks with affinity for the core. In some embodiments, techniques for compatibilizing incompatible polymer blends may be useful. In some embodiments, hot melt adhesives, pressure sensitive adhesives and/or curable adhesives may be used.

In some embodiments, panels described herein exhibit indicia (including alphanumerics). In some embodiments, the indicia is in the form of a trademark or copyrighted material, including a registered trademark or registered copyright as defined under any of the countries, territories, etc., of the world (including the United States). In some embodiments, the indicia is on at least one of the first major surface of the first layer, on the second major surface of the second layer. In some embodiments, the panel is in the form of the indicia.

In some embodiments, panels described herein exhibit at least one absorption band less than 1400 Hz (in some embodiments, less than 1300 Hz, or even less than 1200 Hz). In some embodiments, panels described herein exhibit at least one absorption band in a range from at least 800 Hz to 1200 Hz (in some embodiments, in a range from at least 500 Hz to 1300 Hz, at least 200 Hz to 1400 Hz, or even at least 20 Hz to 1400 Hz). The absorption bands of panels described herein are measured as described in the Examples using the "Normal Incidence Acoustical Absorption Test" and the "Reverberation Chamber Test."

Advantageously, in some embodiments, panels (or articles comprising one or more panels) described herein have a thickness in a range from 4 mm to 8 mm, 6 mm to 10 mm, or even 8 mm to 15 mm, and exhibiting at least one absorption band less than 1400 Hz (in some embodiments, less than 1300 Hz or even less than 1200 Hz). In some embodiments, panels (or articles comprising one or more panels) described herein have a thickness in a range from 4 mm to 8 mm, 6 mm to 10 mm, or even 8 mm to 15 mm, and exhibiting at least one absorption band in a range from at least 800 Hz to 1200 Hz (in some embodiments, in a range from at least 500 Hz to 1300 Hz, at least 200 Hz to 1400 Hz, or even at least 20 Hz to 1400 Hz). For instance, each of Examples 5 and 6, described below, include panels comprising a thickness of less than 15 mm (more particularly 6.2 mm) and exhibit at least one absorption band less than 1400 Hz. In some embodiments, laminated articles described herein comprising at least two panels laminated together (or three, four, five, or more stacked panels laminated together) have a thickness in a range from 8 mm to 50 mm, 10 mm to 30 mm, or even 12 mm to 40 mm, and exhibiting at least one absorption band in a range from at least 600 Hz to 1000 Hz (in some embodiments, in a range from at least 500 Hz to 1300 Hz, at least 200 Hz to 1400 Hz, or even at least 20 Hz to 1400 Hz).

In some embodiments, panels described herein exhibit an acoustical absorption of at least 50 (in some embodiments, at least 55, 60, 65, 70, 75, or even 80) percent. The acoustical absorption of panels described herein are measured as described in the Examples using the "Normal Incidence Acoustical Absorption Test" and the "Reverberation Chamber Test."

In some embodiments, panels described herein exhibit a flexural rigidity of at least 1 N-m² (in some embodiments, at least 5 N-m², 10 N-m², 15 N-m², 20 N-m², 25 N-m², 30 N-m², 35 N-m², 40 N-m², 45 N-m², 50 N-m², 55 N-m², or even 60 N-m²) per meter of width. The flexural rigidity of panels described herein are measured as described in the Examples using the "3 Point Flexure Test."

In some embodiments, panels described herein exhibit a compression strength of at least 0.35 MPa (in some embodiments, at least 0.5 MPa, 1 MPa, 1.5 MPa, 2 MPa, 3 MPa, or even 4 MPa). The compression strength of panels described herein are measured as described in the Examples using the "Compression Test."

Advantageously, in some embodiments, panels (or articles comprising one or more panels) described herein exhibit both a flexural rigidity of at least 1 N-m² (in some embodiments, at least 5 N-m², 10 N-m², 15 N-m², 20 N-m², 25 N-m², 30 N-m², 35 N-m², 40 N-m², 45 N-m², 50 N-m², 55 N-m², or even 60 N-m²) per meter of width and at least one absorption band less than 1400 Hz (in some embodiments, less than 1300 Hz or even less than 1200 Hz). In some embodiments, panels (or articles comprising one or more panels) described herein exhibits both a flexural rigidity of at least 1 N-m² (in some embodiments, at least 5 N-m², 10 N-m², 15 N-m², 20 N-m², 25 N-m², 30 N-m², 35 N-m², 40 N-m², 45 N-m², 50 N-m², 55 N-m², or even 60 N-m²) per meter of width and at least one absorption band in a range from at least 800 Hz to 1200 Hz (in some embodiments, in a range from at least 500 Hz to 1300 Hz, at least 200 Hz to 1400 Hz, or even at least 20 Hz to 1400 Hz). For instance, Examples 5 and 6, described below, includes panels exhibiting both a flexural rigidity of at least 1 N-m² per meter of width and at least one absorption band less than 1400 Hz.

Both modeling and physical experimental measurements have shown that the acoustic absorption behavior of a panel according to the present disclosure is a function of each of the panel thickness, cell sizes, passageway percentage, skin hole sizes, and number of connected cells. This is demonstrated in Jonza, J., Herdtle, T., Kalish, J., Gerdes, R. et al., "Acoustically Absorbing Lightweight Thermoplastic Honeycomb Panels," SAE Int. J. Veh. Dyn., Stab., and NVH 1(2):2017, doi:10.4271/2017-01- 1813. For instance, 1) as the number of connected cells is increased, the frequency of the peak absorption decreases; 2) as the skin hole size (whether provided by one hole or multiple holes) increases, the frequency of the peak absorption increases; 3) as the width of the cell decreases, more cells need to be connected to exhibit absorption at the same frequency; 4) as the cell height decreases, the frequency of the peak absorption increases; 5) as the passageway size decreases, the frequency of the peak absorption decreases (plus with less total absorption and narrower absorption peaks); and 6) as the skin thickness increases, the frequency of peak absorption decreases. Hence, multiple variables can be adjusted to optimize (e.g., tune) the acoustic absorption of a panel or article for a particular end use application.

In an aspect, the present disclosure describes a panel comprising first, second, and third layers, each of the first, second, and third layers having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells and a plurality of walls extending from the second surface of the second layer to the first surface of the third layer, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series. In certain disclosures, the panel further comprises a fourth layer, the fourth layer having first and second opposed major surfaces and a core disposed there between, the fourth layer being free of any openings between the first and second major surfaces of the fourth layer. Likewise, any number of layers may be included in the panels: four, five, six, seven, eight, nine, ten, etc.

In an aspect, the present disclosure describes an article comprising a panel comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series, wherein the panel is a flat panel or a shaped panel.

Exemplary embodiments of panels described herein can be formed articles such as automotive parts, such as engine covers, wheel well liners, underbody shields, headliners, trunk covers, floor mats, carpet backings, hood liners, and tonneau covers, housings for generators, motors, appliances, tools, etc., and in general, any item emitting sound; architectural walls, panels, floors, doors, enclosures, ducts, sound barriers, etc., aircraft, watercraft, trucks, trains, agricultural equipment, fork lifts, and trailers.

When the article is a housing of an item that emits sound, the article typically absorbs at least one acoustical frequency (emitted from the item) of less than 1400 Hz (in some embodiments, less than 1300 Hz or even less than 1200 Hz). Similarly, in an aspect, the present disclosure describes a method of absorbing at least one acoustical frequency below 1400 Hz by disposing an article adjacent to an item that emits at least one acoustical frequency below 1400 Hz (in some embodiments, less than 1300 Hz or even less than 1200 Hz), wherein the article comprises at least one panel comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series. In certain embodiments, the article comprises an enclosure at least partially surrounding the item that emits at least one acoustical frequency below 1400 Hz, while in others the article comprises a housing of the item that emits at least one acoustical frequency below 1400 Hz. Often, the article is an automotive part, such as the parts disclosed above.

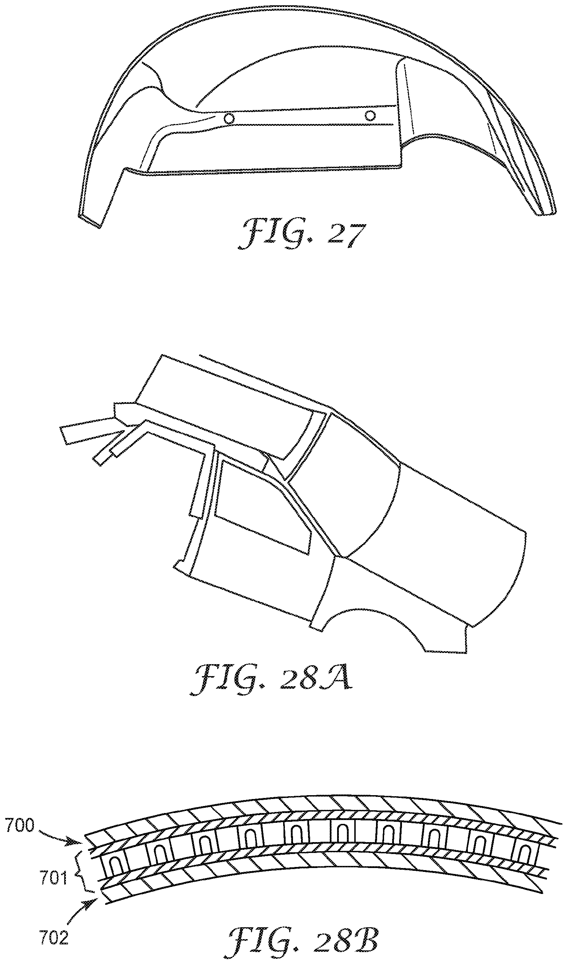

As sheet metal in automobiles has been reduced to decrease vehicle weight, vibration can occur that is bothersome to the occupants. Some companies are now putting a honeycomb layer between the metal roof and the fabric or nonwoven headliner. Exemplary panels according to the present disclosure can be shaped by compression molding, thermoforming or injection molding to take the roof shape. The panels can be made of a stiff material to maximize roof stiffness, or a flexible material to increase stiffness and also damp vibration. FIG. 28A shows a roof area of an automobile, and FIG. 28B shows a cross-sectional view of a portion of an exemplary headliner. More particularly, a panel according to at least certain embodiments of the present disclosure is shaped, such as to have the curve of the panel 701 shown in FIG. 28B. The figure shows the roof 700 and the fabric or non-woven liner 702 adjacent or adhered to the panel 701.

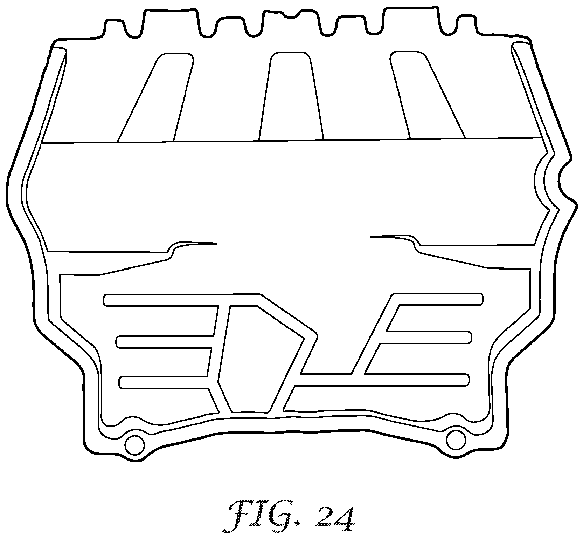

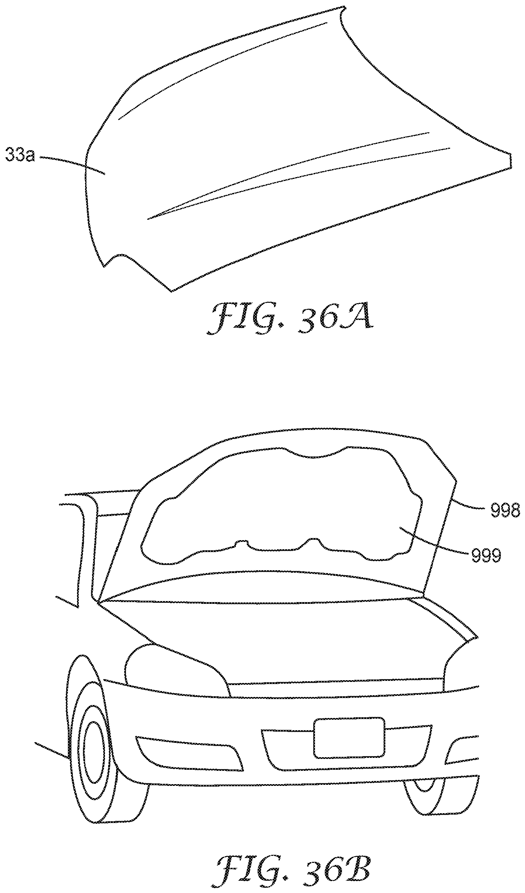

Referring to FIG. 24, an exemplary underbody shield is shown. Examples 10-11 below describe the preparation of exemplary underbody shields comprising shaping panels according to the present disclosure. Referring to FIG. 36B, an exemplary hood liner 999 is shown attached to the underside of an automotive hood 998. FIG 36A shows a schematic perspective view of the top of an automotive hood 33a.

The panels of at least certain aspects of this disclosure can find utility as an engine cover. In such cases, it will likely be useful to use polymers with high temperature resistance and flame retardant properties. Suitable polymers include for instance and without limitation, polyamides including PA6, PA66, polybutylene terephthalate (PBT), poly ethylene terephthalate (PET), poly ethylene naphthalate (PEN), polyphenylene sulfide (PPS), Polyether imide (PEI), Polyether sulfone (PES), Polyether ketone (PEK) and Polyether ether ketone (PEEK) and fluoropolymers.

Moreover, additives such as flame retardants are typically added to heat resistant polymeric materials to provide further protection during high temperature applications. Useful flame retardants include for instance and without limitation, inorganics such as alumina trihydrate (ATH), huntite and hydromagnesite, various hydrates, phosphorus, boron compounds, antimony trioxide and pentoxide and sodium antimonate; halogenated compounds such as organochlorines including chlorendic acid derivatives and chlorinated paraffins; organobromines such as decabromodiphenyl ether (decaBDE), decabromodiphenyl ethane, polymeric brominated compounds, brominated carbonate oligomers (BCOs), brominated epoxy oligomers (BEOs), tetrabromophthalic anyhydride, tetrabromobisphenol A (TBBPA) and hexabromocyclododecane (HBCD); organophosphates such as triphenyl phosphate (TPP), resorcinol bis(diphenylphosphate) (RDP), bisphenol A diphenyl phosphate (BADP), and tricresyl phosphate (TCP); phosphonates such as dimethyl methylphosphonate (DMMP); and phosphinates such as aluminium diethyl phosphinate; compounds containing both phosphorus and a halogen such as tris(2,3-dibromopropyl) phosphate(brominated tris) and chlorinated organophosphates such as tris(1,3-dichloro-2-propyl)phosphate (chlorinated tris or TDCPP) and tetrakis(2-chlorethyl)dichloroisopentyldiphosphate.

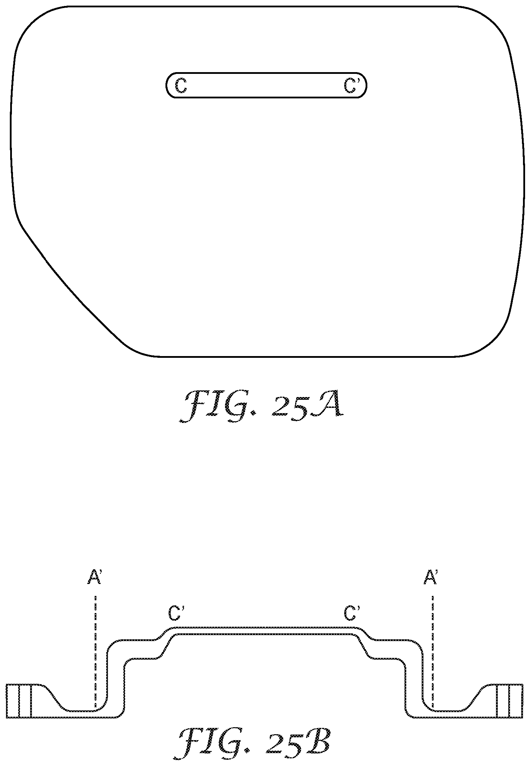

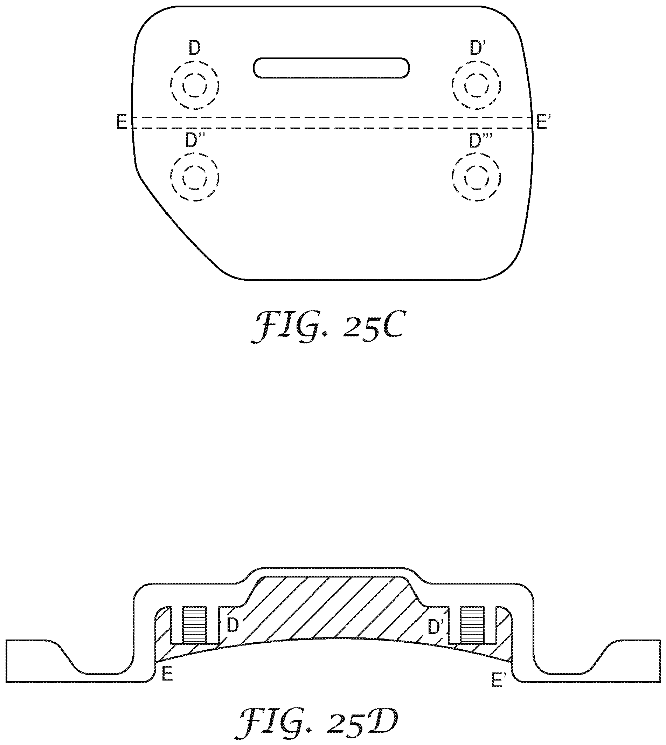

The engine cover optionally has a design resembling FIGS. 25A-25D. Referring to FIG. 25A, a ridge is formed in the panel for aesthetic or structural purposes by shaping the panel out of the plane and compressing its thickness as shown as C-C' in the figures. At the edge of the mold, shown in regions A and A' of FIG. 25B, the honeycomb core can be completely collapsed so that the top and bottom skins are in contact, then trimmed (e.g., with a rotary tool, a laser or a water jet) for a clean edge that does not show the honeycomb core. Additionally, injection over-molding can be employed to produce attachment points shown as D, D', D" and D'" in FIGS. 25C and 25D. Depicted are molded threaded regions, but bushings, lock housings, fixturing mechanisms, receptacles and/or lock receptacle regions could also be used. Further, ribs may be molded against the panel for additional stiffening and/or aesthetic reasons. An exemplary rib is depicted in FIG. 25D, shown as rib E-E'.

The acoustical spectrum of an engine depends on many factors including engine design, load and rotations per minute (rpm). The panels according to the present disclosure may thus need to be tuned to several prominent frequencies.

An acoustical panel may be thermoformed as described below in Example 10, then inserted into an injection mold for the attachments and ribbing to be overmolded on the panel. Alternatively, the panel may be preheated outside of the injection mold and the closing of the injection mold shapes the panel, such that the overmolding occurs in a single machine.

Tire noise is a major contributor to automotive noise. It can be advantageous to absorb this noise close to the source, e.g., the contact patch between the tire and the roadway. Fender liners are thus a useful application for panels according to aspects of this disclosure. Not only does the sound reaching the cabin get reduced, but also some sound that would otherwise reflect off a solid fender liner and remain in the environment is reduced by the panel absorption. As in other embodiments disclosed herein, thermoforming, compression molding and injection molding may all be employed in producing these parts. An exemplary wheel-well liner in shown in FIG. 27.

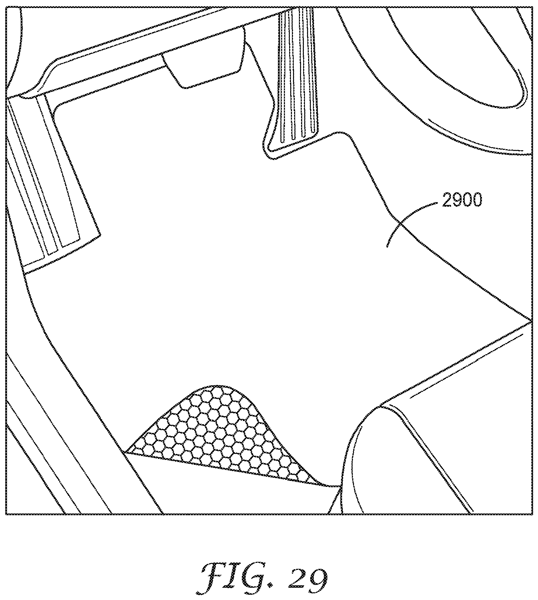

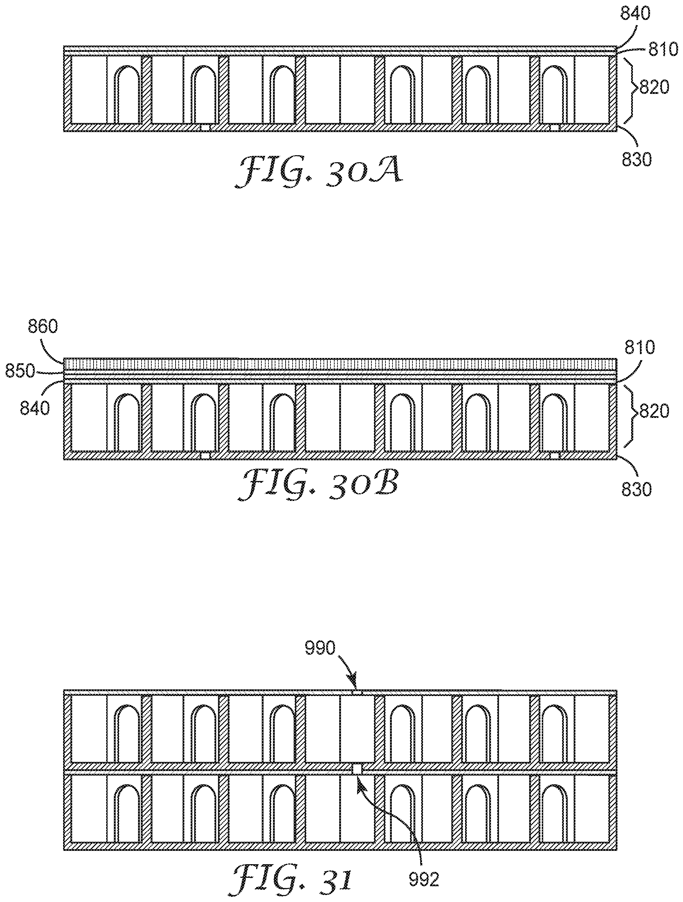

Panels according to at least certain aspects of this disclosure can be used in the flooring of the vehicle, again in a position between the roadway (e.g., a major noise source) and the occupant(s) of the vehicle. For example, a floor pan of the vehicle could be made of the panels, such as by laminating multiple panels and/or using fiber reinforced or metal stiff skins to provide the rigidity to no longer necessitate use of metal flooring. Alternatively, or in addition, a floor mat (see, e.g., the exemplary floor mat 2900 depicted in a vehicle in FIG. 29) may be made of an elastomeric or flexible plastic or rubber. An exemplary floor mat design is shown in FIG 30A. The solid skin layer 810 could be positioned toward an occupant so that dirt and sand do not enter the panel and the surfaces may be wiped or washed clean. An additional layer 840 may also be used that potentially has advantageous features such as a designed level of friction, easy clean composition, and abrasion resistance. In this case, the skin layer with the holes or perforations 810 faces the sound source (e.g., the road). Alternatively, a laminated panel could be used with holes facing the road and the occupants. In the latter case, a second chance for absorption within the cabin of the vehicle can further reduce the noise level. Referring to FIG. 30B, another design is depicted that could either comprise a floor mat or carpeting in the vehicle. In this case, the additional layer 850 is an adhesive or tie layer and the layer 860 is carpeting.

In another aspect, the present disclosure describes a laminated article comprising first and second panels, each of the first and second panels comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series, wherein the second surface of the second layer of the first panel is directly attached to the first surface of either the first layer or the second layer of the second panel. In select embodiments, the laminated article comprises an enclosure (e.g., to at least partially enclose an item that emits at least one acoustical frequency).

Optionally, the laminated article further comprises a third panel, the third panel comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series, wherein the second surface of the second layer of the first panel is directly attached to the first surface of the first layer of the second panel, and wherein the second surface of the second layer of the second panel is directly attached to the first surface of the first layer of the third panel. The second surface of the second layer of the first panel may be directly attached to the first surface of the second layer of the second panel. Any number of panels may be laminated together: four, five, six, seven, eight, nine, ten, etc.

One method for making articles from panels described herein comprises shaping a panel described herein via thermoforming to provide the article. In some embodiments, thermoforming includes heating the panel and applying force to shape the panel against at least one tool. Typically the panel is heated to a processing temperature where it becomes compliant. The panel is then positioned within a mold, between 2 platens prior to the platens closing. The panel is shaped by mechanical force from the tool, or by vacuum or pneumatic pressure followed by a cooling period to return the panel to a rigid structure. Exemplary polypropylene (PP) panels can be thermoformed, for example, with the panel pre-heat temperature of 310-350°F (154-177°C), mold temperature of 150°F (66°C), clamping force of 4,000 lbs. (1,814 kgf) and cooling time of 30 seconds.

In a further aspect, the present disclosure describes a method of making an article, the method comprising: pre-heating a panel; placing the panel proximate to a thermoforming mold; and applying vacuum to shape the panel to provide the article.

In an additional aspect, the present disclosure describes a method of making an article, the method comprising: pre-heating a panel; placing the panel between matched halves of a (e.g., thermoforming) mold; and applying pressure to close the mold and shape the panel to provide the article.

Another method for making articles from panels described herein comprises shaping a panel described herein via insert molding to provide the article. In some embodiments, putting a pre-heated panel inside of an injection mold tool, closing the tool, and injection molding plastic to provide the article. The mold closing action forms the panel into a three dimensional shape while the overmolded plastic may produce additional features such as fastening points, ribbing or other structural/cosmetic features. The mold closing force may be enough to shape the panel, or thermoforming/compression molding performed prior to insert molding may be required; in either case, pre-heating the formed panel may not be necessary.

For instance, in another aspect, a method is provided comprising placing at least a portion of a panel in an injection molding die; and overmolding at least one mold structure on a surface of the panel in the injection molding die, thereby forming a material-to-material connection between the surface of the panel and the mold structure. The method optionally further comprises at least partially shaping a (flat) panel using thermoforming or compression molding prior to placing at least a portion of the panel within the injection molding die, e.g., using vacuum, pressure, or match metal shaping to shape the panel. Some exemplary mold structures comprise at least one (molded) bushing, lock housing, fixture mechanism, receptacle, or lock receptacle region. Suitable materials for a mold structure are not particularly limited, and include each of a thermoset material, a thermoplastic material, a photocurable material, and a bulk metallic glass (e.g., an amorphous alloy). Mold structures can be applied to any portion of a panel, such as on at least one major surface of the panel, an edge of the panel, or a shaped part of the panel. Additionally, at least one profile element may be molded directly onto the mold structure, on an edge side of the panel, or both.

In select embodiments, the injection molding die is configured to reduce or increase a thickness of at least a portion of the panel or of the entire panel by 5% to 95% or to increase a thickness of at least a portion of the panel by 5% to 50%. For example, the injection molding die may be shaped to reduce the thickness of a portion or all of a panel by 5% or more, 10% or more, 15% or more, 20% or more, 25% or more, 30% or more, 35% or more, 40% or more, 45% or more, 50% or more, 55% or more, or even 60% or more; and 95% or less, 90% or less, 85% or less, 80% or less, 75% or less, 70% or less, or 65% or less. Typically, the decrease in thickness is a decrease in the thickness of the core of the panel. Likewise, the injection molding die may be shaped to increase the thickness of a portion or all of a panel by 5% or more, 10% or more, 15% or more, 20% or more, 25% or more, or even 30% or more; and 50% or less, 45% or less, 40% or less, or 35% or less. Increasing the thickness of a panel may involve pulling a vacuum in the injection molding die to draw out the panel material.

In certain embodiments, the entire panel is inserted into the injection molding die. Further, a thermoplastic material may be injection molded around the panel to form the mold structure. The panel is optionally preheated prior to placing it within the injection molding die.

A panel undergoing overmolding may be flat or alternatively comprise a (e.g., three dimensional) shape. For a panel that has already been shaped, the method may further comprise altering the shape of the panel (e.g., "reshaping" the panel) in the injection molding die. In certain embodiments, at least one cell is consolidated and folded over to form a reinforcement bead. When a number of adjacent cells are consolidated and folded over they can form a "hem" having a thickness approximately equal to twice the thickness of the first and second layers of the panel.

Another method for making articles from panels described herein comprises shaping a panel described herein via compression molding to provide the article. In some embodiments, putting a panel inside of a mold between 2 platens, heating the mold, closing the platens to shape the panel while maintaining pressure during a mold cooling stage provides the article. In some embodiments, the panel must be pre-heated prior to closing the mold to ensure material compliance. Exemplary polypropylene (PP) panels can be compression molded, for example, without panel pre-heating, thermal cycling mold temperatures of 305°F (152°C) and 150°F (66°C), clamping force of 30,000 lbs. (13,607 kgf) and cooling/pressure holding time of 30 seconds.

Another method for making articles from panels described herein comprises:
providing the first layer;
providing the second layer;
extruding the core; and
laminating the first and second layers to the core.

In some embodiments, laminating the first layer to the core occurs during extrusion of the core. For example, a film die can be configured to drop the extrudate into the first nip of a 3-roll stack, such that it is between the skin film and the tooling (middle) roll. The extrudate will solidify while in contact with the tooling roll, and adhere to the first layer. After travelling about 180° around the tooling roll, the first layer side contacts the silicone (third) roll. A belt puller located beyond the silicone roll can be used to control the pulling with a force sufficient to remove the solidified extrudate from the tooling roll. The second layer may be unwound over the top of the belt puller and continuously contacting the top belt. A molten tie layer can be delivered (e.g., from a film die connected to another extruder) onto the top of the open honeycomb just prior to contacting the second layer in the entrance to the belt puller. The tie layer solidifies, bonding the honeycomb to the second layer while being held flat by the belt puller. A panel with first and second layers adhered to the core exits the belt puller.

In some embodiments, an adhesive may be used to laminate the first and second layers to the extruded core. In some embodiments, two tie layers may be used to laminate the first and second layers to the extruded core.

There may be a need for thicker panels, for example, either for increased mechanical rigidity or lower frequency absorption. It is possible to combine two panels into a thicker one in several configurations and by several methods. For example, in FIG. 31, two panels may be positioned so that the honeycomb walls align in the thickness direction and the panels are welded together. As used herein, "weld" refers to the attachment of two polymeric materials using heat. The heat may be provided through various mechanisms, including for instance and without limitation, conduction, vibration, oscillation, radiant energy (e.g., laser or infrared energy), or convection of a fluid. Typically, two polymeric materials are welded together by applying heat to a surface of each of the materials, bringing the two heated surfaces together, and allowing the heated surfaces to cool and form a bond, such as through entanglement of polymers from each surface. Pressure is usually applied to hold the two polymeric materials together and promote the formation of a weld between the two polymeric materials as they cool. These welding techniques have the advantage that no new materials are introduced into the construction, so that recyclability of the finished parts is more facile.

In an aspect, the present disclosure describes a method of making a laminated article comprising first and second panels, the method comprising welding the first and second panels together, wherein each of the first and second panels comprise first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series, wherein the second surface of the second layer of the first panel is directly attached to the first surface of the first layer of the second panel. In certain embodiments, the welding comprises: bringing the second surface of the second layer of the first panel to a temperature above the melting point of the second surface of the second layer of the first panel; bringing the first surface of the first layer of the second panel to a temperature above the melting point of the first surface of the first layer of the second panel; and holding the second surface of the second layer of the first panel in contact with the first surface of the first layer of the first surface of the second panel to form a bond between the first panel and the second panel as each of the second surface of the second layer of the first panel and the first surface of the first layer of the first surface of the second panel cools.

Alternatively, adhesives may be used to join two or more panels together. Pressure sensitive or structural adhesives may be used depending on the required properties of the finished article. The adhesives may by triggered by radiation, such as including ultraviolet, visible, infrared, gamma, or e-beam, or by heating to effect curing. Contact pressure may be sufficient for the pressure sensitive adhesives. Another alternative includes using an extruded tie layer of the same polymer composition to bond two panels together in a continuous process. Preheating of the pre-made panel surfaces and/or a sufficiently high tie layer temperature may be required to provide an adequate bond between the panels.

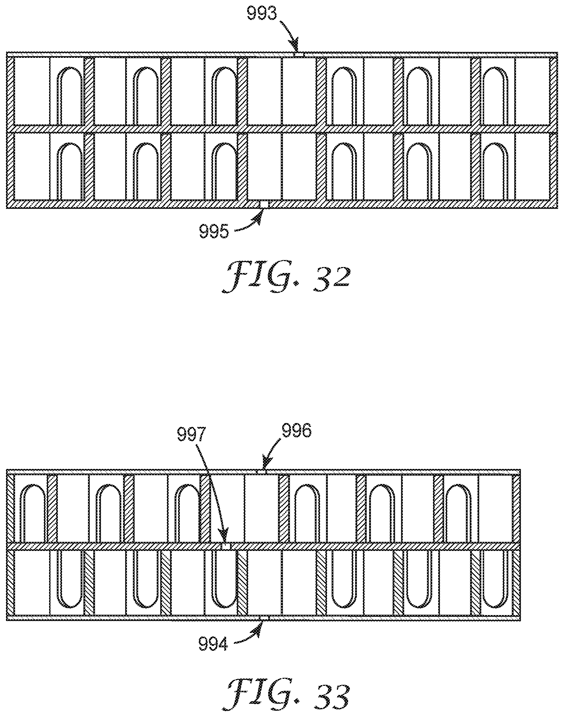

The configuration of the panels comprising two or more panels may have the holes or perforations on one side of the panel or both sides of the panel. FIGS. 31-33 depict some possible geometries. For example, FIG. 31 depicts two panels with the honeycomb walls aligned in the thickness direction and the hole from the top skin 990 extends through the middle layers 992 to interconnect channels. The holes do not have to be of the same size. This is useful to absorb lower frequencies by doubling the length and the volume of the channels. FIG. 32 shows two panels aligned like FIG. 31, with a hole in the top skin 993 and one in the bottom skin 995, but there are no holes interconnecting the top and bottom panels. In this case, the stiffness of the panel is increased, and sound may be absorbed that is incident on either side of the panel. In this case the channel lengths and volumes are not doubled. The hole sizes or perforations in each skin can be of different sizes to tune each side of the panels to a different frequency band. It should be noted that 3, 4, 5 or even 10 or more panels could be connected by welding or adhesives to make a single thicker laminated article.

In an aspect, the present disclosure describes a method of making an article, the method comprising: obtaining first and second panels; contacting the first and second panels such that the core of the first panel is aligned with the core of the second panel; and holding the first panel and the second panel in contact to form a bond between the core of the first panel and the core of the second panel as the first and second panels cool to form the article, wherein the core of the first panel and the core of the second panel together form a core disposed between the layer of the first panel and the layer of the second panel. The heating is typically provided by conduction, vibration, oscillation, radiant energy, or convection of a fluid. In certain embodiments, the method is a continuous method of forming the article whereas in other embodiments the method is a batch method of forming the article.

A means of aligning the panels is typically required for all of these panels made by combining multiple panels, unless a random combination of channel lengths and volumes will provide suitable acoustical absorption. For example, FIG. 33 shows two panels with one of them flipped over 180 degrees. The honeycomb walls are not likely to be aligned in this case, so some channels will be very short and of low volume, while others may be longer and still other may have a hole in both the top and bottom skin.

In an additional aspect, the present disclosure describes a method of making a panel, the method comprising: generating a panel by an additive manufacturing method; wherein the panel comprises first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series. In certain embodiments, the opposed first major surface is obtained and the remainder of the panel is generated on the first major surface by the additive manufacturing method. In alternate embodiments, the entire panel is generated by the additive manufacturing method. Often, the additive manufacturing process comprises a layer-by-layer process.

In a further aspect, the present disclosure describes a method of manufacturing an article, the method comprising: modeling an acoustical performance and a structural performance of a plurality of walls forming interconnected channels within the core of a panel; and producing the article comprising a plurality of the walls having the acoustical performance, the structural performance, or both, by an additive manufacturing method.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Test Methods

### Normal Incidence Acoustical Absorption Test

In general, ASTM E-1050 (2008), was employed to measure the acoustic absorption with normal incidence acoustic wave. Specifically, for the honeycomb panel test, a 100 mm inner diameter impedance tube (obtained from Bruel & Kjaer, Naerum, Denmark, under the trade designation "Impedance Tube Kit Type 4206") was used. In the tube, a speaker (obtained from Bruel & Kjaer, as Impedance Tube Kit Type 4206) was used to generate broad band frequency from 10 Hz to 6400 Hz at one end of the tube with the test specimen in place at the other end. The specimen was mounted so as to touch the hard wall on the back side of the impedance tube, with the side of the specimen having holes facing the noise source. To avoid acoustic leakage around the honeycomb specimen, thin tape (obtained under the trade designation "SCOTCH BRAND TAPE" from the 3M Company, St. Paul, MN) was wrapped around the circumference, sufficient to provide a snug fit. In the middle of the tube, there were two 6.35 mm (0.25 inch) microphones (obtained from Bruel & Kjaer, as Impedance Tube Kit Type 4206), to measure the sound pressure inside the tube. Using the measured sound pressures from two microphones with known distance, and using acoustic plane wave theory, the amount of acoustic energy absorbed by the material was calculated. In the 100 mm diameter tube, the absorption coefficient was measured within the frequency range of 50 Hz to 1600 Hz, where plane wave theory is known to be valid.

### Reverberation Chamber Test

SAE Test Method J2883 (2015), was used to measure the acoustic absorption of a material in a diffused field in which sound comes from random directions (0° to 180° angle of incidence) measured in a reverberation chamber (obtained from Autoneum, Winterthur, Switzerland, under the trade designation "ALPHA CABIN"). Specifically, the three speakers in the reverberation chamber were used to generate one third or one twelfth center frequency tones from 400 Hz to 10,000 Hz and five microphones (obtained from PCB Piezotronics, Buffalo, NY, as Type 130E20) were used to measure the sound pressure levels in the reverberation chamber. Each microphone measured how fast the noise decayed in time. A faster decay was an indication of better absorption performance of the material being tested. From the decay rate, the random incidence absorption coefficient was calculated by averaging the five microphone results. The samples were situated in the middle of the reverberation chamber, which was held in a controlled temperature (23°C) and humidity (55% relative humidity) environment to ensure consistent acoustical performance results.

### 3-Point Flex Test

In general, mechanical properties were measured in flexure following ASTM D790 (2007). Specifically, a screw-driven mechanical testing machine obtained under the trade designation "INSTRON" as Model 1122, from Instron, (Norwood, MA) was used with two 0.5 inch (12.7 mm) support cylinders and a loading nose cylinder of 0.5 inch (12.7 mm). The test specimen width was about 1 inch (25.4 mm), the span was 6 inch (152.4 mm), and the crosshead speed 0.25 inch/min (6.35 mm/min). The flexural rigidity (D in N^{∗}m²) is defined by this equation: D = 12Ebd³ where b = specimen width (m), d = specimen thickness (m) and E is the modulus of elasticity of the specimen (Pa = N/m²) as defined in ASTM D790 (2007, eqn. 6). Flexural rigidity (N^{∗}m²) per meter of width is: D/b = 12Ed³.

### Compression Test

In general, specimens were tested in compression, following ASTM C 365 / C 365 M (2005). Specifically, test specimens were cut in length and width to 1.5 inch x 1.5 inch (38 mm x 38 mm) and the thickness was measured for each specimen. Thicknesses were about 0.25 inch (6.35 mm). The test apparatus' 15.24 cm (6 inch) diameter parallel plates were compressed together at 0.2 in./min. (5.08 mm/min.). The machine compliance (deflection as a function of load) correction was used to calculate the sample strain in the modulus calculation. The test was carried out to a maximum load of at least 34 kN. This occurred at greater than 60% strain (sample thickness up to 40% of the original thickness). The compression strength is reported as the peak load at yield. The yield strain occurred at 6-11% strain.

### Examples 1-4

Commercial modeling software (acoustics module of software obtained under the trade designation "COMSOL MULTIPHYSICS" from COMSOL, Inc., Burlington, MA) was used to model the acoustical absorption of 14 mm hexagons of two wall heights: 10 mm and 12.7 mm.

These designs were printed using a 3-D printer (obtained under the trade designation "PROJET 7000 HD SLA" from 3D Systems, Rock Hill, SC) using a resin obtained under the trade designation "VISIJET FLEX" from 3D Systems. FIG. 14 shows the pattern of connected hexagons and holes located that were both modeled and 3D-printed. Each specimen had two sets of 5 connected hexagons (1460, 1460'), a first pair of 6 connected hexagons (1470, 1470'), a second pair of 6 connected hexagons (1471, 1471'), and three sets of 7 connected hexagons (1480, 1480', 1480"). The upper skin was printed to leave holes (see FIG. 14, 1460a through 1480c) in the upper skin (and Table 1, below).

**Table 1**

| | Hole Diameters, mm | | | | |
|---|---|---|---|---|---|
| Example | Sets of 5 connected cells (1460, 1460') holes 1460a,b | First pair of sets of 6 connected cells (1470, 1470') holes 1470a,b | Second pair of sets of 6 connected cells (1471, 1471') holes 1471a,b | Sets of 7 connected cells (1480, 1480', 1480") holes 1480a,b,c | Wall heights, mm |
| 1 | 2.543 | 3.354 | 2.798 | 3.290 | 10.0 |
| 2 | 3.434 | 4.025 | 3.078 | 3.290 | 10.0 |
| 3 | 2.543 | 3.354 | 2.798 | 3.290 | 12.7 |
| 4 | 3.434 | 4.025 | 3.078 | 3.290 | 12.7 |

Example 1 and 3 specimens were tested, and then the holes were expanded by drilling to create additional Example 2 and 4 specimens, which were also tested. Table 1, above, shows the dimensions of the "original" and "larger" hole sizes for Examples 1-4.

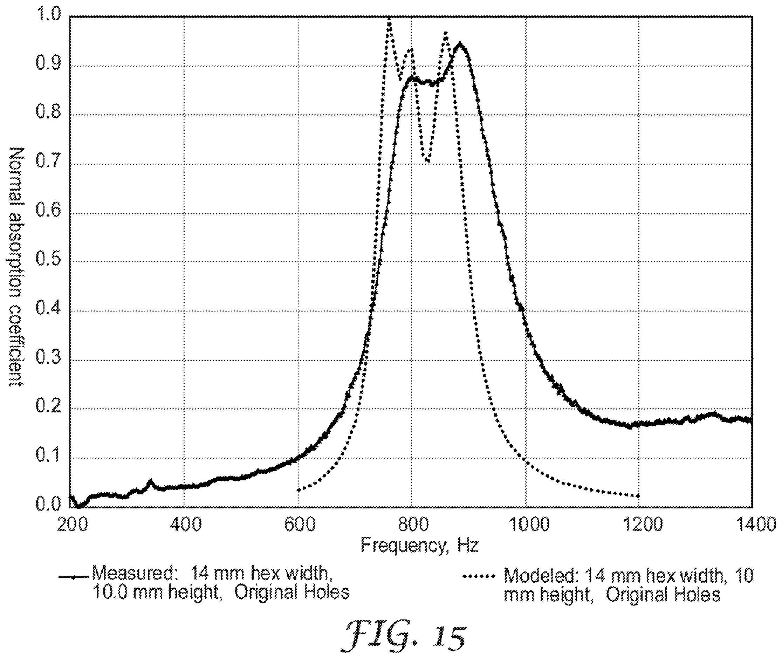

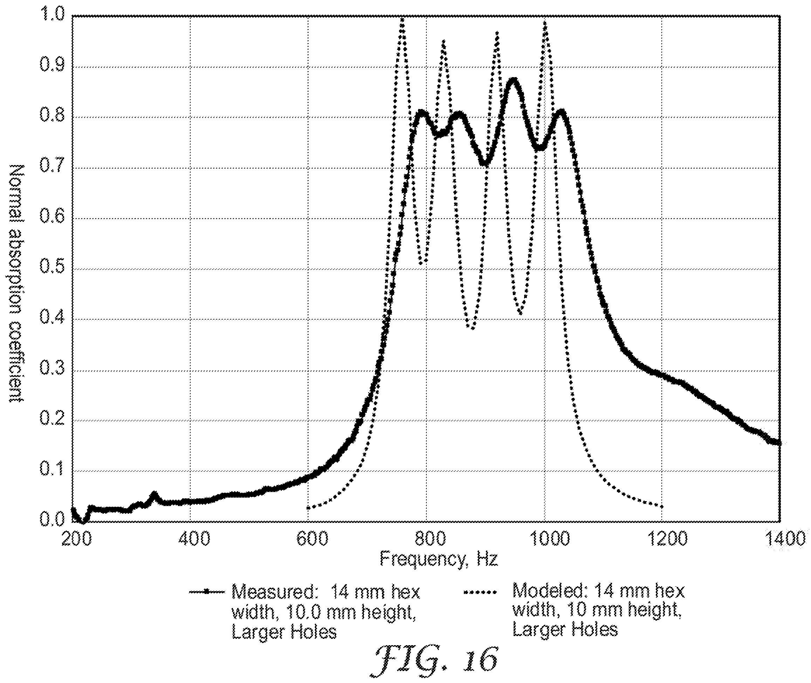

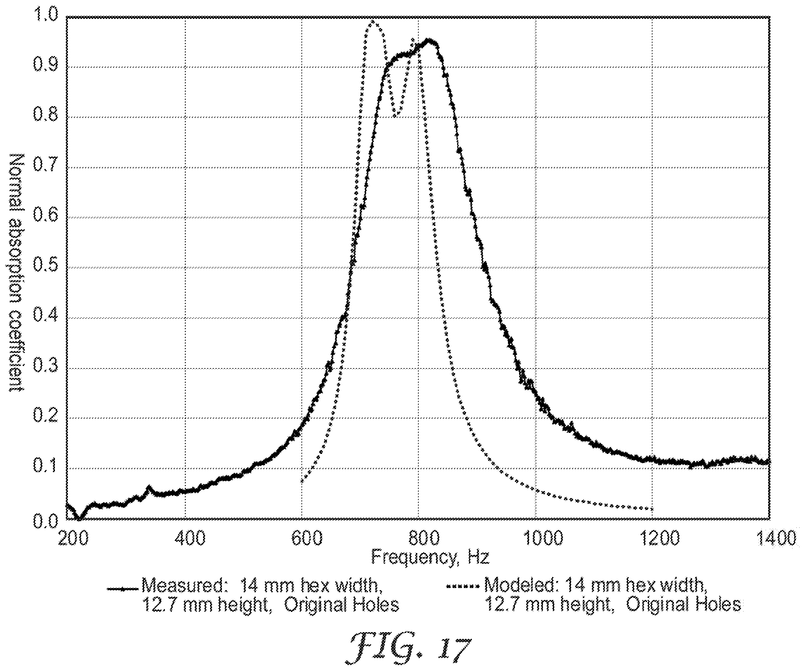

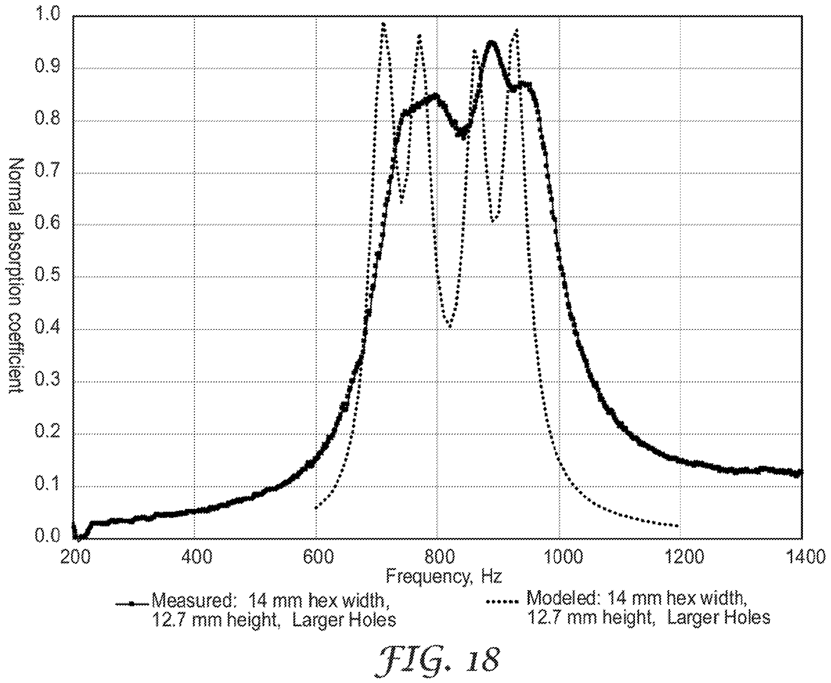

FIGS. 15 and 16 show the acoustical absorption coefficient modeled and measured using the Normal Incidence Acoustical Absorption Test for the 10 mm tall cell walls with the "original" (Example 1) and "larger" (Example 2) hole sizes, respectively. FIGS. 17 and 18 show the acoustical absorption coefficient modeled and measured using the Normal Incidence Acoustical Absorption Test for the 12.7 mm tall cell walls with the "original" (Example 3) and "larger" (Example 4) hole sizes, respectively.

### Examples 5 and 6

A honeycomb panel with 11.5 mm hexagonal cells was prepared by extrusion replication lamination, then passageways were machined to make a number of linear chambers of 5 hexagons and 7 hexagons, and twice as many chambers of 6 hexagons. Holes were drilled in the top skin, then the bottom skin was laminated in a dual belt laminator. Details of the acoustical panel preparation are given below.

### -Skin Preparation

A 35 wt. % glass-fiber filled polypropylene (GFPP) resin (obtained under the trade designation "XMOD GB306" from Borealis, Vienna, Austria) was extruded in a 2.5 inch (6.25 cm) extruder (obtained under the trade designation "NRM" from Davis-Standard, Pawcatuck, CT) at a screw speed of 90 rpm, and with barrel zones ramped up, from the feed end to the discharge end, from 290°F (143°C) to 460°F (238°C). An 18 inch (457 mm) film die at 460°F (238°C) was used to drop the extrudate into a three-roll stack. The extrudate was nipped between a first chrome roll at 90°F (32°C) and a second chrome roll at 120°F (49°C) and stripped off the second chrome roll to a silicone rubber roll at 90°F (32°C). The line speed was 10 feet/minute and the resulting 0.023 inch (0.58 mm) thick GFPP film was wound onto 6 inch (13.5 cm) outside diameter cores.

### -Honeycomb Panel Preparation

The film described above was unwound into the nip of the three-roll stack casting station, but with the center chrome roll replaced by a tooling roll that had multiple 11.5 mm connected hexagons (width dimension) cut 0.30 inch (7.6 mm) deep into its surface. The grooves forming the hexagonal pattern had a draft angle of 2° and were 0.024 inch (0.6 mm) wide at the bottom and 0.51 inch (1.3 mm) wide at the roll surface. Polypropylene resin (obtained under the trade designation "PRO-FAX 8523" from LyondellBasell, Rotterdam, Netherlands) was fed to the extruder ("NRM"), operated at 48 rpm, with barrel zone temperatures ramped from 350°F (177°C) to 450°F (232°C). The film, intended to become a skin layer, had about 90 degrees of wrap on the chrome nip roll that was set to 150°F (66°C) and the gap between this roll and the tooling roll was 0.043 inch (1.09 mm). The line speed was 3 feet/minute (0.91 m/min.) and the honeycomb tooling roll was set to 200°F (93°C). The film die was set to 430°F (221°C), and was configured to drop the extrudate into the nip such that it was between the skin film and the tooling roll. The extrudate crystallized while in contact with the tooling roll, and after travelling about 180° around the tooling roll, the skin side contacts the silicone (third) roll. A belt puller located beyond the silicone roll was used to control the pulling force at 250 lbs. (1110 N); a force sufficient to remove the solidified extrudate from the tooling roll onto the silicone roll, but insufficient to elongate (distort) the hexagonal geometry. The honeycomb, adhered to the GFPP bottom skin, was measured to have 0.270 inch (6.86 mm) wall height. A second GFPP film intended to be the second skin was unwound over the top of the belt puller and continuously contacted the top belt. A molten tie layer of the polypropylene ("PROFAX 8523") was extruded, using a 1.5 inch (3.75 cm) extruder (obtained from Davis-Standard) operating at 50 rpm, onto the top of the open honeycomb just prior to contacting the top skin in the entrance to the belt puller. The barrel temperatures of the tie layer extruder were ramped from 280°F (138°C) to 500°F (260°C) and the die was set to 550°F (288°C). The resulting panel was 0.30 inch (7.6 mm) thick.

### -Acoustical Panel Preparation

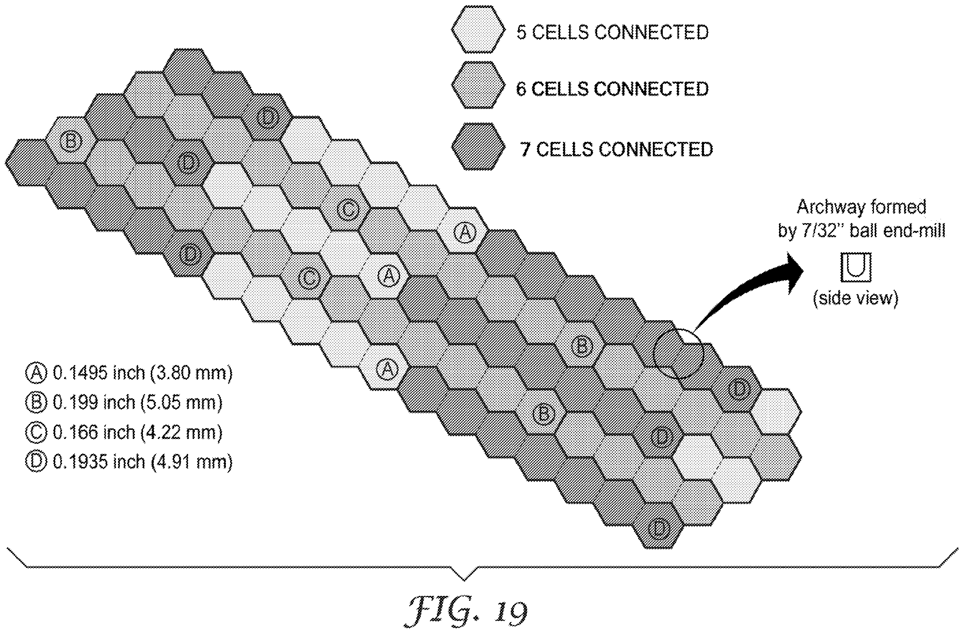

Three honeycomb panels about 44 inch x 13 inch (1118 mm x 330 mm), produced as described above, were machined in a vertical machining center (obtained as Model 84 CNC from Hurco Companies, Inc., Indianapolis, IN). A panel was first mounted with bottom skin taped, using double-sided tape, to the machine's stage. Then, the top skin was removed by end-mill machining, and a 7/32 inch (5.55 mm) ball end mill was used to remove material from some honeycomb walls to within 0.015 inch (0.38 mm) of the bottom skin. The pattern cut in each panel is shown in FIG. 19. There are twice as many sets of 6-connected cells as 5-connected cells and 7-connected cells. FIG. 19 shows only a portion of the panel, which extended in both length and width. Holes were then drilled through the bottom skin at locations indicated in FIG. 19, and the hole diameters are listed in FIG. 19.

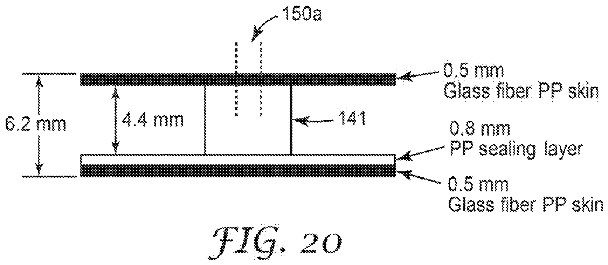

A new top skin was laminated to the workpiece having the drilled bottom skin and honeycomb walls, using a dual belt laminator (obtained under the trade designation "KFK-E 1500" from Meyer Co., Riverside, CT). A 0.5 mm thick skin, as described in the skin preparation section, was fed onto the bottom belt along with 0.8 mm impact-polypropylene sheeting (obtained under the trade designation "MC100-F" from Optimum Plastics, Bloomer, WI), which was in contact with the honeycomb so as to serve as a sealing layer. The belt speed was 3 fpm (0.9 m/min.), the bottom belt was set to 180°C, the top belt was set to 130°C, the belt gap was set to 6.5 mm, and the nip was fixed at 0.1 mm. The cross-section of the laminated panel is shown in FIG. 20, with the laminated new skin shown as being on the bottom of the structure.

Three panels, made as above, were then taped together to form a 1118 mm x 990 mm panel (Example 5) and measured for random incidence acoustical absorption using the Reverberation Chamber Test. Following this measurement, the holes labelled A and C in FIG. 19, in the 3 panels of the specimen of Example 5, were re-drilled for the set of 5 connected cells from 0.1495 inch (3.80 mm) to 0.359 inch (9.12 mm) and for one of the sets of 6 connected cells from 0.166 inch (4.22 mm) to 0.359 inch (9.12 mm) to produce the specimen for Example 6.

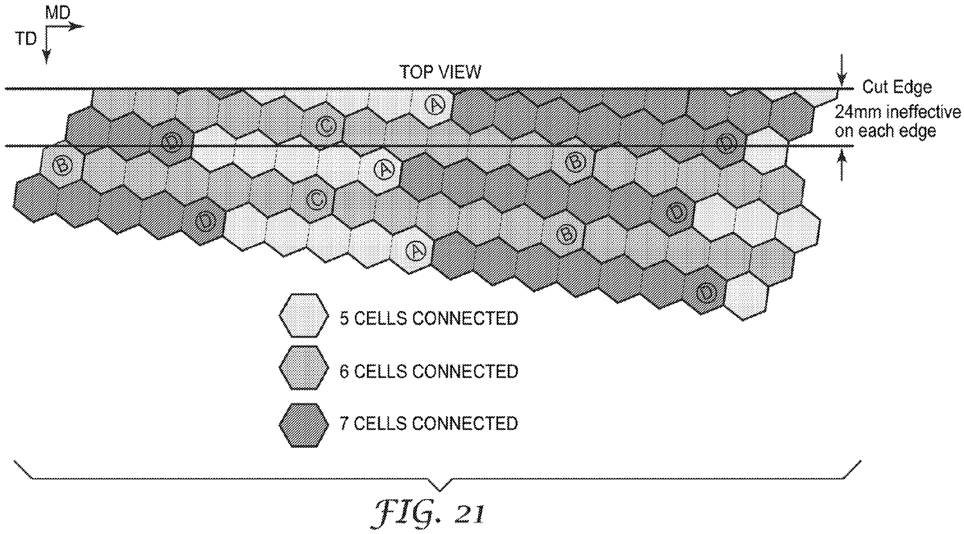

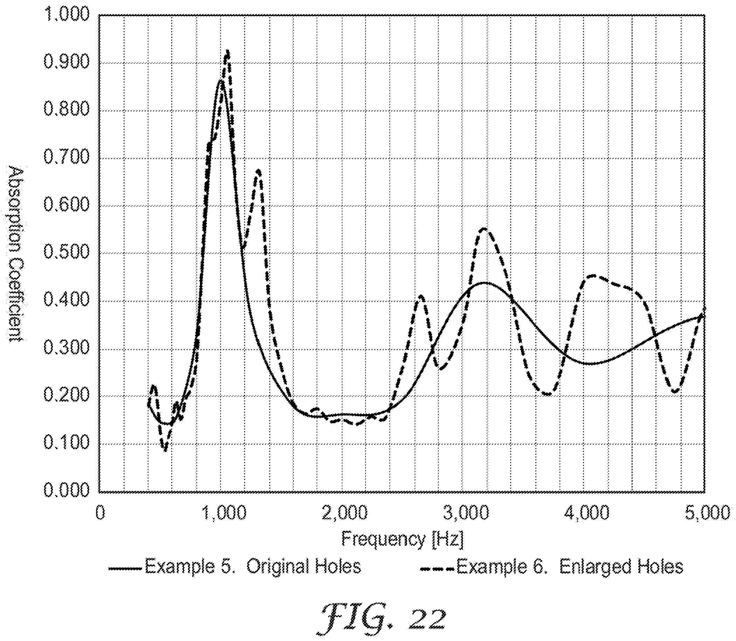

Because the hexagons were not aligned with the edges of the sample, the effective area of the panel is 75% of the actual area. FIG. 21 shows the geometry of the hexagons relative to the edge of the panel. An area correction was applied to the acoustical absorption coefficient plotted vs. frequency in FIG. 22. A clear peak centered at about 1000 Hz is seen for the specimen of Example 5. A second peak is found at 1320 Hz for the specimen of Example 6 (with its enlarged holes).

### Examples 7-9

The skin preparation and honeycomb panel preparation procedures were as described for Example 5.

### -Acoustical Panel Preparation

Three honeycomb panels about 39 inch x 15 inch (1143 x 432 mm), produced as described above, were machined in the vertical machining center. A panel was first mounted using double stick tape. Then, the top skin was removed and a 7/32 inch (5.55 mm) ball end mill was used to remove honeycomb walls to within 0.015 inch (0.38 mm) of the bottom skin. The pattern of interconnected hexagons was changed to be the nested hexagon array shown in FIG. 1. There are two sets of 5 interconnected hexagons, two sets of 6 interconnected hexagons and two sets of 7 interconnected hexagons in the larger 37 hexagon repeat unit that was repeated in these panels.

The holes were drilled in the top skin and their sizes are given in Table 2, below.

**Table 2**

| Example | 5 Hexes | 6 Hexes | 7 Hexes |
|---|---|---|---|
| 7 | 2 mm (0.079 inch) | 2 mm (0.079 inch) | 2 mm (0.079 inch) |
| 8 | 3 mm (0.118 inch) | 2 mm (0.079 inch) | 2 mm (0.079 inch) |
| 9 | 4 mm and 3 mm (0.1575 inch and 0.118 inch) | 3 mm and 2 mm (0.118 inch and 0.079 inch) | 3.5 mm and 2 mm (0.138 inch and 0.079 inch) |

Some holes already drilled to yield the specimen of Example 7 were enlarged by redrilling with larger bits to make the specimen of Example 8, and the process was applied again to half of the holes to make the specimen of Example 9. As in Examples 5 and 6, three sheets were taped together to form a single, larger (in this case, 1143 mm x 1296 mm) panel.

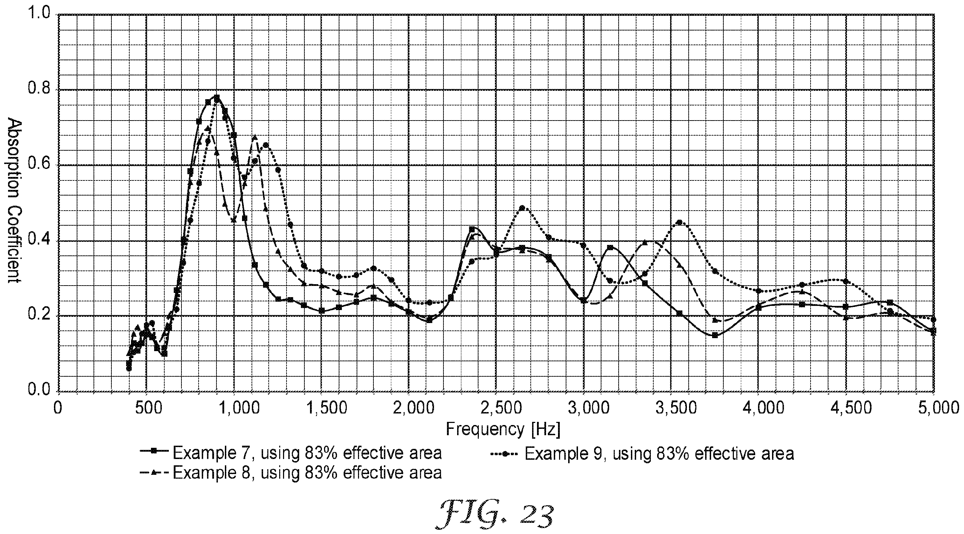

The 75% effective area correction was also applied to the absorption coefficient vs. frequency data shown in FIG. 23. As in Example 6, making a set of holes larger produced another band for Example 8 as compared to Example 7. With the hole sizes used for Example 9, the multiple peaks became a band of absorption about 570 Hz wide. The absorption band (750 Hz to 1320 Hz) for Example 9 is useful, for example in absorbing frequencies produced by tires rolling on a road.

The mechanical properties of Example 6 were measured in flexure using the 3-Point Flex Test. The flex test results are shown in Table 3, below.

**Table 3**

| Specimen | Thickness, | Width, | Maximum Load, | Maximum Stress, | Flex Modulus, | Rigidity , | Rigidity , |
|---|---|---|---|---|---|---|---|
| | mm | mm | kgf | MPa | MPa | N^{∗}m² | N^{∗}m² per m |
| Example 6 MD holes down | 6.35 | 26.6 | 15.6 | 32.7 | 2619 | 1.49 | 56.0 |
| Example 6 MD holes up | 6.35 | 26.1 | 14.6 | 31.1 | 2573 | 1.43 | 55.0 |
| Example 6 TD holes down | 6.35 | 26.7 | 6.9 | 14.4 | 1204 | 0.69 | 25.7 |
| Example 6 TD holes up | 6.35 | 26.1 | 9.2 | 19.6 | 1178 | 0.66 | 25.2 |

The designation MD means machine direction and TD means transverse direction as indicated in FIG. 21. The Compression Test was performed on the specimens of Examples 6 and 9. The results are shown in Table 4, below.

**Table 4**

| Example | Compressive Modulus (MPa) | Compression Strength (MPa) |
|---|---|---|
| 6 | 3.7 | 4.3 |
| 9 | 63.0 | 3.4 |

There are numerous variables that can be adjusted to tune the absorption band to a region of interest and to the breadth desired. Examples some of the variables are listed in Table 5, below.

**Table 5**

| | Variables |
|---|---|
| General | Shape and number of sides for the cells |
| | Pattern of connected cells |
| | Length of connected cells |
| | Volume of connected cells |
| Core | Width |
| | Height |
| | Wall thickness |
| | Air passageway (% of wall area) |
| | Modulus |
| | Tan delta |
| Skin | Thickness |
| | Hole sizes |
| | Hole locations |
| | Multiple smaller holes vs. single hole |
| | % hole / cell area |
| | Modulus |
| | Tan delta |

Tan delta in Table 5 refers to the ratio of out of phase mechanical modulus to the in-phase modulus (E'/E") as described generally in polymer science textbooks, for example: Introduction to Polymer Viscoelasticity, Aklonis et al., John Wiley & Sons, Inc., 1972.

Further, for example, a scrim may be substituted for the solid skin with holes if most of the scrim is filled in to fill the space between fibers, except for the region of the cell where the sound wave enters the panel (see, e.g., 150a in FIG. 1A).

Also, for example, the control flexural stiffness and compression strength of the panel can be adjusted by the choice of skin and core modulus (see, e.g., Ch. 12, "Composite Construction Materials Handbook", Robert Nicholls, Prentice-Hall, 1976.

### Examples 10-13

### Thermoformed Underbody Panel (Example 10)

An acoustically absorbing polypropylene (PP) panel with 0.5 mm PP skins with the design depicted in Figure 4 (with cell 480 connected to channel 460") had holes drilled into one skin with the following sizes: 490a = 3mm, 490b = 2.6 mm, 490c = 2.6 mm, 490d = 4 mm, 490e = 2.6 mm and 490f = 3 mm. This 8.35 mm thick panel was thermoformed into an automotive underbody panel depicted in Figure 24. The panel was preheated for 25 seconds between two infrared emitting panels positioned approximately 250 mm from the top and bottom surfaces of the panel until its surface temperature reached 170°C. Then the panel was transported within the opening between male and female mold halves and the clamps released the panel simultaneously with the mold closing motion. The mold temperature was at 25°C. Once the tool was closed and locked in position, pneumatic cells were inflated to 103.4 KPa to provide approximately 134.5 kN of force that was maintained for 30 seconds, then released to re-open the mold. Fans were subsequently used to cool the part for an additional 10 seconds before it was removed from the mold.

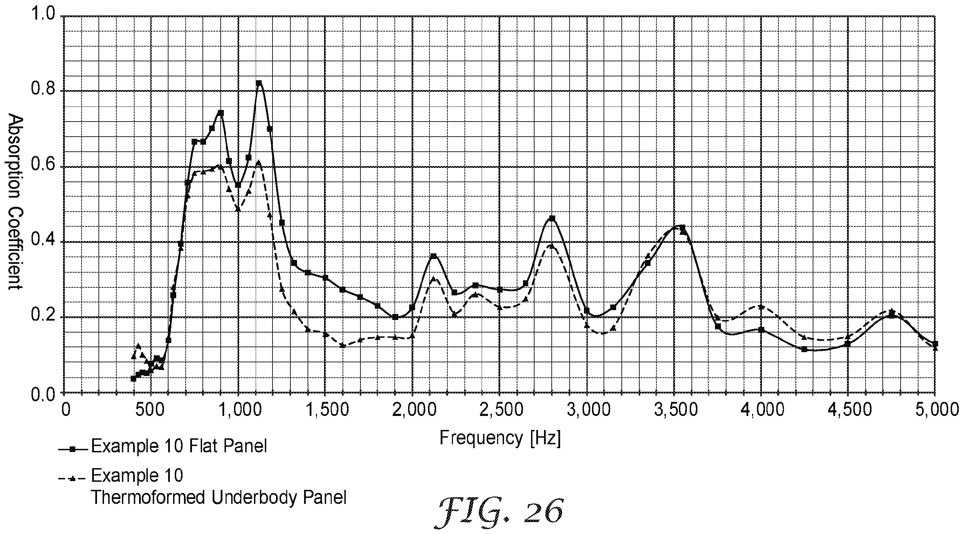

The part was placed in the Alpha cabin and the random incidence Acoustical Absorption Coefficient measured using the Reverberation Chamber Test (following SAE Test Method J2883). The results for Example 10 are shown in FIG. 26.

### Smaller hole size panel (Example 11)

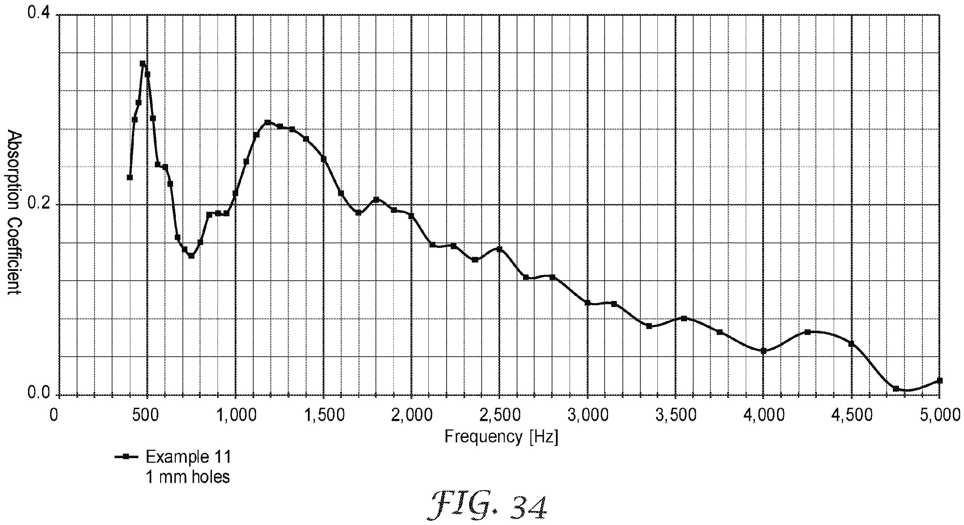

An acoustically absorbing polypropylene (PP) panel with 0.5 mm PP skins with the design depicted in Figure 4 (with cell 480 connected to channel 460") had 1 mm holes drilled in locations 490a, 490b, 490c, 490d, 490e and 490f. The part was placed in the Alpha cabin and the random incidence Acoustical Absorption Coefficient measured using the Reverberation Chamber Test (following SAE Test Method J2883). The results for Example 11 are also shown in FIG. 34. Note that the smaller hole size has shifted the absorption band from the 700-1250 Hz range in Figure 26 to a narrow band at 400-630 Hz and a broader high order band from 950 to 1700 Hz in Figure 34.

### Laminate of two panels (Example 12)

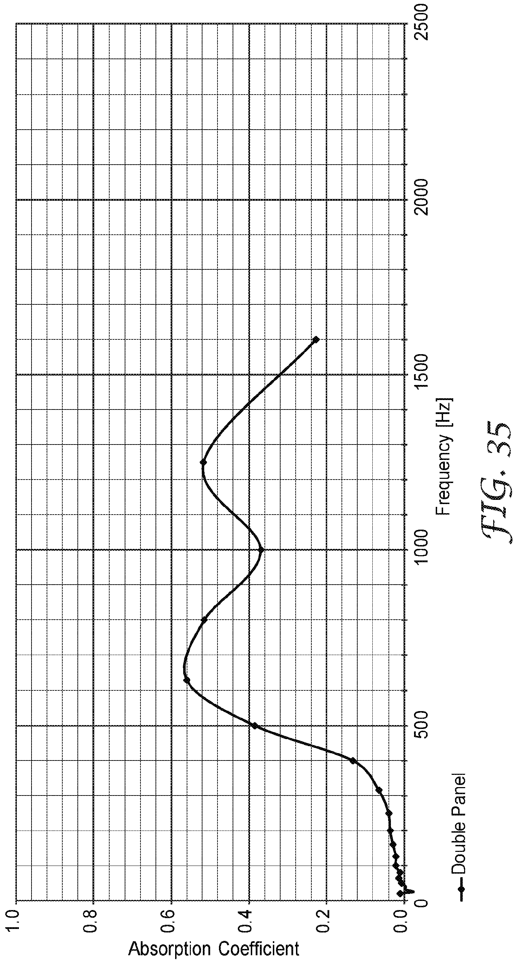

Two 6" x 6" (152 mm x 152 mm) pieces of the starting panel described in Example 10 (not thermoformed) were laminated together as described below. 3M transfer adhesive 467MP (3M Company (St. Paul, MN) (50 µm thickness) was adhered to the bottom of the top piece, then a drill was used to drill through the bottom layer and the adhesive layer with the same sized bit as the holes in the top layer. PTFE alignment pins of 3.95 mm diameter and 17 mm length were placed into four of the 4 mm holes in the bottom piece. Then the top piece was aligned with the PTFE pins from the bottom piece extending into the just-drilled holes. A platen press was used to put the two panels into intimate contact with 4000 lb force to provide a pressure of 111 psi (766 kPa) for 90 seconds. This 18 mm thick sample was then machined to a 100 mm diameter and some tape used around the perimeter to provide a good seal to the ID of the impedance tube. The sample has one active set of 37 hexagons, that comprise about 55% of the area of the 100mm diameter impedance tube. The normal incidence acoustical absorption test was used to measure the data shown in Figure 35. One can see that the peak absorption has moved from the 700-1250 Hz range in Figure 26 to the 460-860 Hz range in Figure 35. No area correction was applied to this data, although certainly it understates the absorption of a larger panel with much fewer ineffective cells.

### Panel enclosure (Example 13)

The panel of Example 10 was cut into pieces of the following dimensions: Two of 11.3 inch (288 mm) x 9.66 inch (245.5mm), two of 11 inch (279 mm) x 9.66 inch (245.5 mm) and one of 12 inch (305 mm) x 11 inch (279 mm). These were taped together around the backside (without holes) edges to form a box with a bottom but no top and the holes facing the inside of the box. This absorbing panel box fit snugly into a 3/8 inch (9.5 mm) thick polycarbonate box that had dimensions of 12 inch (305 mm) width x 11 inch (279 mm) length x 10 inch (254 mm) height. For the sound source, an iPhone 6 (Apple (Cupertino, CA)) played seven individual tones generated from the NCH Tone Generator application at the phone's full volume. The frequencies were 783.99 Hz, 830.61 Hz, 932.33 Hz, 987.77 Hz, 1046.5 Hz, 1108.73 Hz and 1174.66 Hz. The iPhone playing the seven tones was placed on the bottom of the empty polycarbonate box, and a sound level meter from Radio Shack (CAT NO. 33-2055) (General Wireless Operations, Inc. (Fort Worth, TX)) was held even with the top of the box. 88 dBA was measured as the sound level. The experiment was repeated after sliding the absorbing panel box inside the polycarbonate box. The meter level now read 75 dBA (e.g., a 13 dBA noise level reduction).

## Claims

1. A panel comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has an opening extending between the first and second major surfaces of the first layer into one and only one cell in the series of connected, fluidly communicating cells.

2. The panel of claim 1 that exhibits at least one absorption band less than 1400 Hz, said absorption being measured in accordance to the Reverberation Chamber Test described in the description.

3. The panel of any preceding claim that exhibits a flexural rigidity of at least 1 Nm² per meter of width, said flexural rigidity being measured in accordance to the 3-Point Flex Test described in the description.

4. The panel of any preceding claim that exhibits a compression strength of at least 0.35 MPa, said flexural rigidity being measured in accordance to the Compression Test described in the description.

5. A method of making the panel of any preceding claim, the method comprising:
providing the first layer;
providing the second layer;
extruding the core; and
laminating the first and second layers to the core.

6. A panel comprising first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein at least 50 percent of the openings in a cell wall emanate from either the first or second layer, and wherein the first layer has an opening extending between the first and second major surfaces of the first layer into one and only one cell in the series of connected, fluidly communicating cells.

7. An article comprising the panel of claim 1, wherein the panel is a flat panel or a shaped panel.

8. The article of claim 7, wherein the article is an automotive part selected from the group consisting of an engine cover, a wheel well liner, an underbody shield, a headliner, a trunk cover, a tonneau cover, a floor mat, a hood liner, and a carpet backing.

9. The article of claim 7, wherein the article is an enclosure, a duct, or a sound barrier; wherein the article is a housing of an item that emits sound, wherein the article absorbs at least one acoustical frequency of less than 1400 Hz; or wherein the article is selected from the group consisting of a wall, a floor, a ceiling and a door or panels added to a wall, a floor, a ceiling or a door.

10. A panel comprising first, second, and third layers, each of the first, second, and third layers having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells and a plurality of walls extending from the second surface of the second layer to the first surface of the third layer, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has an opening extending between the first and second major surfaces of the first layer into one and only one cell in the series of connected, fluidly communicating cells.

11. A laminated article comprising first and second panels, each of the first and second panel is a panel according to claim 1, wherein the second surface of the second layer of the first panel is directly attached to the first surface of either the first layer or the second layer of the second panel.

12. A method of making a panel, the method comprising:
generating a panel by an additive manufacturing method;
wherein the panel is a panel according to claim 1.

13. A method of making an article, the method comprising:
shaping a panel using a forming process to provide the article, wherein the forming process utilizes pressure, vacuum, or match metal shaping; and
optionally overmolding the panel in an injection molding die during or after the forming process,
wherein the panel is optionally pre-heated prior to the forming process, and wherein the panel is a panel according to claim 1.

14. A method of making an article, the method comprising:
obtaining at least first and second panels, wherein each panel comprises a layer having first and second opposed major surfaces and a core disposed on the layer, wherein the core has a plurality of walls extending from the second surface of the layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the layer has an opening extending between the first and second major surfaces of the layer into one and only one cell in the series of connected, fluidly communicating cells;
heating at least one of the first and second panels;
contacting the first and second panels such that the core of the first panel is aligned with the core of the second panel; and
holding the first panel and the second panel in contact to form a bond between the core of the first panel and the core of the second panel as the first and second panels cool to form the article, wherein the core of the first panel and the core of the second panel together form a core disposed between the layer of the first panel and the layer of the second panel and wherein the heating is provided by conduction, vibration, oscillation, radiant energy, or convection of a fluid.

15. A method of making an article, the method comprising:
placing at least a portion of a panel in an injection molding die; and
overmolding at least one mold structure on a surface of the panel in the injection molding die, thereby forming a material-to-material connection between the surface of the panel and the mold structure,
wherein the panel is a panel according to claim 1.

## Patentansprüche

1. Eine Platte, umfassend eine erste und eine zweite Schicht, die jeweils eine erste und eine zweite Hauptfläche, die einander gegenüberliegen, und einen dazwischen angeordneten Kern aufweisen, wobei die zweite Schicht frei von jeglichen Öffnungen zwischen der ersten und der zweiten Hauptfläche der zweiten Schicht ist, wobei der Kern eine Mehrzahl von Wänden aufweist, die sich von der zweiten Oberfläche der ersten Schicht zu der ersten Oberfläche der zweiten Schicht erstrecken und eine Reihe von miteinander verbundenen Zellen bereitstellen, wobei einige der Zellwände Öffnungen aufweisen, die zwischen mindestens 3 Zellen in Reihe eine Fluidverbindung bereitstellen, wobei jede Zellwand eine Mehrzahl von Seiten aufweist, wobei jede Seite einer Zellwand eine Fläche aufweist, und wobei die Öffnung in einer Zellwand eine Fläche aufweist, die mindestens 50 Prozent der Fläche einer Seite dieser Zellwand ist, und wobei die erste Schicht eine Öffnung aufweist, die sich zwischen der ersten und der zweiten Hauptfläche der ersten Schicht in eine und nur eine Zelle in der Reihe miteinander verbundener, fluidisch kommunizierender Zellen erstreckt.

2. Die Platte nach Anspruch 1, die mindestens ein Absorptionsband von unter 1400 Hz aufweist, wobei die Absorption gemäß dem in der Beschreibung beschriebenen Hallraumtest gemessen wird.

3. Die Platte nach einem der vorhergehenden Ansprüche, die eine Biegesteifigkeit von mindestens 1 Nm² pro Meter Breite aufweist, wobei die Biegesteifigkeit gemäß dem in der Beschreibung beschriebenen 3-Punkt-Biegetest gemessen wird.

4. Die Platte nach einem der vorhergehenden Ansprüche, die eine Druckfestigkeit von mindestens 0,35 MPa aufweist, wobei die Biegesteifigkeit gemäß dem in der Beschreibung beschriebenen Drucktest gemessen wird.

5. Ein Verfahren zur Herstellung der Platte nach einem der vorstehenden Ansprüche, wobei das Verfahren umfasst:
Bereitstellen der ersten Schicht;
Bereitstellen der zweiten Schicht;
Extrudieren des Kerns; und
Laminieren der ersten und der zweiten Schicht auf den Kern.

6. Eine Platte, umfassend eine erste und eine zweite Schicht, die jeweils eine erste und eine zweite Hauptfläche, die einander gegenüberliegen, und einen dazwischen angeordneten Kern aufweisen, wobei die zweite Schicht frei von jeglichen Öffnungen zwischen der ersten und der zweiten Hauptfläche der zweiten Schicht ist, wobei der Kern eine Mehrzahl von Wänden aufweist, die sich von der zweiten Oberfläche der ersten Schicht zu der ersten Oberfläche der zweiten Schicht erstrecken und eine Reihe von miteinander verbundenen Zellen bereitstellen, wobei einige der Zellwände Öffnungen aufweisen, die eine Fluidverbindung zwischen mindestens 3 Zellen in Reihe bereitstellen, wobei mindestens 50 Prozent der Öffnungen in einer Zellwand entweder von der ersten oder der zweiten Schicht ausgehen, und wobei die erste Schicht eine Öffnung aufweist, die sich zwischen der ersten und der zweiten Hauptfläche der ersten Schicht in eine und nur eine Zelle in der Reihe miteinander verbundener, fluidisch kommunizierender Zellen erstreckt.

7. Ein die Platte nach Anspruch 1 umfassendes Erzeugnis, wobei die Platte eine flache Platte oder eine geformte Platte ist.

8. Das Erzeugnis nach Anspruch 7, wobei es sich bei dem Erzeugnis um ein Kraftfahrzeugteil handelt, das aus der Gruppe bestehend aus einer Motorabdeckung, einer Radkastenverkleidung, einer Unterbodenabschirmung, einem Dachhimmel, einer Kofferraumabdeckung, einer Verdeckabdeckung, einer Bodenmatte, einer Motorhaubenverkleidung und einem Teppichunterlage besteht, ausgewählt ist.

9. Das Erzeugnis nach Anspruch 7, wobei das Erzeugnis ein Gehäuse, ein Kanal oder eine Schallbarriere ist; wobei das Erzeugnis ein Gehäuse eines Schall emittierendes Gegenstands ist, wobei das Erzeugnis mindestens eine akustische Frequenz von unter 1400 Hz absorbiert; oder wobei das Erzeugnis aus der Gruppe bestehend aus einer Wand, einem Boden, einer Decke und einer Tür oder Platten, die an eine Wand, einen Boden, eine Decke oder eine Tür angefügt sind, ausgewählt ist.

10. Eine Platte, umfassend eine erste, zweite und dritte Schicht, wobei jede der ersten, zweiten, und dritten Schicht eine erste und eine zweite Hauptfläche, die einander gegenüberliegen, und einen dazwischen angeordneten Kern aufweisen, wobei die zweite Schicht frei von jeglichen Öffnungen zwischen der ersten und der zweiten Hauptfläche der zweiten Schicht ist, wobei der Kern eine Mehrzahl von Wänden aufweist, die sich von der zweiten Oberfläche der ersten Schicht zu der ersten Oberfläche der zweiten Schicht erstrecken und eine Reihe von miteinander verbundenen Zellen und eine Mehrzahl von sich von der zweiten Oberfläche der zweiten Schicht zu der ersten Oberfläche der dritten Schicht erstreckenden Wänden bereitstellen, wobei einige der Zellwände Öffnungen aufweisen, die eine Fluidverbindung zwischen mindestens 3 Zellen in Reihe bereitstellen, wobei jede Zellwand eine Mehrzahl von Seiten aufweist, wobei jede Seite einer Zellwand eine Fläche aufweist, und wobei die Öffnung in einer Zellwand eine Fläche aufweist, die mindestens 50 Prozent der Fläche einer Seite dieser Zellwand ist, und wobei die erste Schicht eine Öffnung aufweist, die sich zwischen der ersten und der zweiten Hauptfläche der ersten Schicht in eine und nur eine Zelle in der Reihe miteinander verbundener, fluidisch kommunizierender Zellen erstreckt.

11. Ein laminiertes Erzeugnis, das eine erste und eine zweite Platte umfasst, wobei die erste und die zweite Platte jeweils eine Platte nach Anspruch 1 sind, wobei die zweite Oberfläche der zweiten Schicht der ersten Platte direkt an die erste Oberfläche entweder der ersten Schicht oder der zweiten Schicht der zweiten Platte angefügt ist.

12. Verfahren zum Herstellen einer Platte, wobei das Verfahren umfasst:
Erzeugen einer Platte durch ein additives Herstellungsverfahren;
wobei die Platte eine Platte nach Anspruch 1 ist.

13. Verfahren zur Herstellung eines Erzeugnisses, wobei das Verfahren umfasst:
Formen einer Platte unter Verwendung eines Formprozesses, um das Erzeugnis bereitzustellen, wobei der Formprozess Druck, Vakuum oder Match Metall-Formen verwendet; und
optional Überformen der Platte in einer Spritzgussform während oder nach dem Formgebungsprozess,
wobei die Platte optional vor dem Formungsprozess vorgewärmt wird und wobei die Platte eine Platte nach Anspruch 1 ist.

14. Verfahren zur Herstellung eines Artikels, wobei das Verfahren umfasst:
Erhalten mindestens einer ersten und zweiten Platte, wobei jede der Platten eine Schicht umfasst, die eine erste und eine zweite Hauptfläche, die einander gegenüberliegen, und einen auf der Schicht angeordneten Kern aufweist, wobei der Kern eine Mehrzahl von Wänden aufweist, die sich von der zweiten Oberfläche der Schicht erstrecken und eine Reihe von miteinander verbundenen Zellen bereitstellen, wobei einige der Zellwände Öffnungen aufweisen, die eine Fluidverbindung zwischen mindestens 3 Zellen in Reihe bereitstellen, wobei jede Zellwand eine Mehrzahl von Seiten aufweist, wobei jede Seite einer Zellwand eine Fläche aufweist, und wobei die Öffnung in einer Zellwand eine Fläche aufweist, die mindestens 50 Prozent der Fläche einer Seite dieser Zellwand ist, und wobei die Schicht eine Öffnung aufweist, die sich zwischen der ersten und der zweiten Hauptfläche der Schicht in eine und nur eine Zelle in der Reihe miteinander verbundener, fluidisch kommunizierender Zellen erstreckt.
Erwärmen mindestens einer von der ersten und zweiten Platte;
Inkontaktbringen der ersten und der zweiten Platte, so dass der Kern der ersten Platte zum Kern der zweiten Platte ausgerichtet ist; und
Zusammenhalten der ersten Platte und der zweiten Platte, um beim Abkühlen der ersten und zweiten Platte zum Ausbilden des Erzeugnisses eine Bindung zwischen dem Kern der ersten Platte und dem Kern der zweiten Platte auszubilden, wobei der Kern der ersten Platte und der Kern der zweiten Platte zusammen einen zwischen der Schicht der ersten Platte und der Schicht der zweiten Platte angeordneten Kern bilden und wobei das Erwärmen durch Leitung, Vibration, Oszillation, Strahlungsenergie oder Konvektion eines Fluids erfolgt.

15. Verfahren zur Herstellung eines Artikels, wobei das Verfahren umfasst:
Platzieren mindestens eines Abschnitts einer Platte in einer Spritzgussform; und
Umspritzen mindestens einer Formstruktur auf einer Oberfläche der Platte in der Spritzgussform, wodurch eine stoffschlüssige Verbindung zwischen der Oberfläche der Platte und der Formstruktur gebildet wird, wobei die Platte eine Platte nach Anspruch 1 ist.

## Revendications

1. Panneau comprenant des première et deuxième couches ayant chacune des première et deuxième surfaces principales opposées et une âme disposée entre elles, la deuxième couche étant exempte de quelconques ouvertures entre les première et deuxième surfaces principales de la deuxième couche, dans lequel l'âme a une pluralité de parois s'étendant de la deuxième surface de la première couche à la première surface de la deuxième couche fournissant une série de cellules connectées, dans lequel certaines des parois de cellule ont des ouvertures assurant une communication fluidique entre une série d'au moins 3 cellules, dans lequel chaque paroi de cellule a une pluralité de côtés, dans lequel chaque côté d'une paroi de cellule a une aire, et dans lequel l'ouverture dans une paroi de cellule a une aire qui vaut au moins 50 pour cent de l'aire d'un côté de cette paroi de cellule, et dans lequel la première couche a une ouverture s'étendant entre les première et deuxième surfaces principales de la première couche dans une et seulement une cellule dans la série de cellules connectées, communiquant fluidiquement.

2. Panneau selon la revendication 1 qui présente au moins une bande d'absorption inférieure à 1400 Hz, ladite absorption étant mesurée conformément au test de chambre de réverbération décrit dans la description.

3. Panneau selon une quelconque revendication précédente qui présente une rigidité à la flexion d'au moins 1 Nm² par mètre de largeur, ladite rigidité à la flexion étant mesurée conformément au test de flexion à 3 points décrit dans la description.

4. Panneau selon une quelconque revendication précédente qui présente une résistance à la compression d'au moins 0,35 MPa, ladite rigidité à la flexion étant mesurée conformément au test de compression décrit dans la description.

5. Procédé de fabrication du panneau selon une quelconque revendication précédente, le procédé comprenant :
la fourniture de la première couche ;
la fourniture de la deuxième couche ;
l'extrusion de l'âme ; et
la stratification des première et deuxième couches à l'âme.

6. Panneau comprenant des première et deuxième couches ayant chacune des première et deuxième surfaces principales opposées et une âme disposée entre elles, la deuxième couche étant exempte de quelconques ouvertures entre les première et deuxième surfaces principales de la deuxième couche, dans lequel l'âme a une pluralité de parois s'étendant de la deuxième surface de la première couche à la première surface de la deuxième couche fournissant une série de cellules connectées, dans lequel certaines des parois de cellule ont des ouvertures assurant une communication fluidique entre une série d'au moins 3 cellules, dans lequel au moins 50 pour cent des ouvertures dans une paroi de cellule émanent soit de la première soit de la deuxième couche, et dans lequel la première couche a une ouverture s'étendant entre les première et deuxième surfaces principales de la première couche dans une et seulement une cellule dans la série de cellules connectées, communiquant fluidiquement.

7. Article comprenant le panneau selon la revendication 1, dans lequel le panneau est un panneau plat ou un panneau profilé.

8. Article selon la revendication 7, dans lequel l'article est une pièce automobile choisie dans le groupe constitué d'un capot moteur, d'un revêtement de passage de roue, d'une protection de bas de caisse, d'une garniture de toit, d'un capot de coffre, d'un cache-bagages, d'un tapis de sol, d'un revêtement de capot et d'un support de moquette.

9. Article selon la revendication 7, dans lequel l'article est une enceinte, un conduit, ou une barrière acoustique ; dans lequel l'article est un logement d'un article qui émet du son, dans lequel l'article absorbe au moins une fréquence acoustique inférieure à 1400 Hz ; ou dans lequel l'article est choisi dans le groupe constitué d'un mur, d'un sol, d'un plafond et d'une porte ou de panneaux ajoutés à un mur, un sol, un plafond ou une porte.

10. Panneau comprenant des première, deuxième et troisième couches, chacune des première, deuxième et troisième couches ayant des première et deuxième surfaces principales opposées et une âme disposée entre elles, la deuxième couche étant exempte de quelconques ouvertures entre les première et deuxième surfaces principales de la deuxième couche, dans lequel l'âme a une pluralité de parois s'étendant de la deuxième surface de la première couche à la première surface de la deuxième couche fournissant une série de cellules connectées et une pluralité de parois s'étendant de la deuxième surface de la deuxième couche à la première surface de la troisième couche, dans lequel certaines des parois de cellule ont des ouvertures assurant une communication fluidique entre une série d'au moins 3 cellules, dans lequel chaque paroi de cellule a une pluralité de côtés, dans lequel chaque côté d'une paroi de cellule a une aire, et dans lequel l'ouverture dans une paroi de cellule a une aire qui vaut au moins 50 pour cent de l'aire d'un côté de cette paroi de cellule, et dans lequel la première couche a une ouverture s'étendant entre les première et deuxième surfaces principales de la première couche dans une et seulement une cellule dans la série de cellules connectées, communiquant fluidiquement.

11. Article stratifié comprenant des premier et deuxième panneaux, chacun des premier et deuxième panneaux est un panneau selon la revendication 1, dans lequel la deuxième surface de la deuxième couche du premier panneau est directement fixée à la première surface soit de la première couche soit de la deuxième couche du deuxième panneau.

12. Procédé de fabrication d'un panneau, le procédé comprenant :
la génération d'un panneau par un procédé de fabrication additive ;
dans lequel le panneau est un panneau selon la revendication 1.

13. Procédé de fabrication d'un article, le procédé comprenant :
le profilage d'un panneau en utilisant un processus de formage pour fournir l'article, dans lequel le processus de formage utilise de la pression, du vide, ou un profilage de métal par correspondance ; et
facultativement le surmoulage du panneau dans une matrice de moulage par injection pendant ou après le processus de formage,
dans lequel le panneau est facultativement préchauffé avant le processus de formage, et dans lequel le panneau est un panneau selon la revendication 1.

14. Procédé de fabrication d'un article, le procédé comprenant :
l'obtention d'au moins des premier et deuxième panneaux, dans lequel chaque panneau comprend une couche ayant des première et deuxième surfaces principales opposées et une âme disposée sur la couche, dans lequel l'âme a une pluralité de parois s'étendant à partir de la deuxième surface de la couche fournissant une série de cellules connectées, dans lequel certaines des parois de cellule ont des ouvertures assurant une communication fluidique entre une série d'au moins 3 cellules, dans lequel chaque paroi de cellule a une pluralité de côtés, dans lequel chaque côté d'une paroi de cellule a une aire, et dans lequel l'ouverture dans une paroi de cellule a une aire qui vaut au moins 50 pour cent de l'aire d'un côté de cette paroi de cellule, et dans lequel la couche a une ouverture s'étendant entre les première et deuxième surfaces principales de la couche dans une et seulement une cellule dans la série de cellules connectées, communiquant fluidiquement ;
le chauffage d'au moins l'un des premier et deuxième panneaux ;
la mise en contact des premier et deuxième panneaux de telle sorte que l'âme du premier panneau est alignée avec l'âme du deuxième panneau ; et
le maintien du premier panneau et du deuxième panneau en contact pour former une liaison entre l'âme du premier panneau et l'âme du deuxième panneau à mesure que les premier et deuxième panneaux refroidissent pour forme l'article, dans lequel l'âme du premier panneau et l'âme du deuxième panneau forment ensemble une âme disposée entre la couche du premier panneau et la couche du deuxième panneau et dans lequel le chauffage est fourni par conduction, vibration, oscillation, énergie rayonnante, ou convection d'un fluide.

15. Procédé de fabrication d'un article, le procédé comprenant :
la mise en place d'au moins une partie d'un panneau dans une matrice de moulage par injection ; et
le surmoulage d'au moins une structure de moule sur une surface du panneau dans la matrice de moulage par injection, ce qui forme une connexion de matériau à matériau entre la surface du panneau et la structure de moule,
dans lequel le panneau est un panneau selon la revendication 1.
